(19)

Europäisches
Patentamt
European
Patent Office
Office européen
des brevets

(11) **EP 3 961 283 A1**

(12) **EUROPEAN PATENT APPLICATION**
published in accordance with Art. 153(4) EPC

(43) Date of publication:
**02.03.2022 Bulletin 2022/09**

(21) Application number: **20924465.6**

(22) Date of filing: **11.03.2020**

(51) International Patent Classification (IPC):
**G02B 13/00** (2006.01)  **G02B 13/18** (2006.01)
**G02B 9/64** (2006.01)

(52) Cooperative Patent Classification (CPC):
**G02B 9/64; G02B 13/00; G02B 13/18**

(86) International application number:
**PCT/CN2020/078814**

(87) International publication number:
**WO 2021/179207 (16.09.2021 Gazette 2021/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Jiangxi Jingchao Optical Co., Ltd.
Nanchang, Jiangxi 330096 (CN)**

(72) Inventors:
• **LIU, Binbin
Nanchang, Jiangxi 330096 (CN)**

• **ZHANG, Wenyan
Nanchang, Jiangxi 330096 (CN)**
• **LI, Ming
Nanchang, Jiangxi 330096 (CN)**
• **ZOU, Hairong
Nanchang, Jiangxi 330096 (CN)**

(74) Representative: **Michalski Hüttermann & Partner
Patentanwälte mbB
Speditionstraße 21
40221 Düsseldorf (DE)**

(54) **OPTICAL SYSTEM, CAMERA MODULE AND ELECTRONIC DEVICE**

(57)  An optical system (10), sequentially arranged from an object side to an image side, includes: a first lens (L1) having a positive refractive power, an object side surface (S1) of the lens being convex at an optical axis, and an image side surface (S2) thereof being concave at the optical axis; a second lens (L2) having a negative refractive power, an object side surface (S3) of the lens being convex at the optical axis, and an image side surface (S4) thereof being concave at the optical axis; a third lens (L3) having a refractive power; a fourth lens (L4), a fifth lens (L5), and a sixth lens (L6) that have a refractive power; a seventh lens (L7) having a positive refractive power, an object side surface (S13) of the lens being convex at the optical axis, and an image side surface (S14) thereof being concave at the optical axis; and an eighth lens (L8) having a negative refractive power, an image side surface (S16) of the lens being concave at the optical axis. The optical system (10) satisfies the condition: 0.2 < DL/Imgh < 0.5.

FIG. 15

**Description**

**TECHNICAL FIELD**

The present disclosure relates to the field of photography, and in particular, to an optical system, a camera module, and an electronic device.

**BACKGROUND**

With the wide application of electronic products such as smart phones, tablet computers, unmanned aerial vehicles, and computers in life, the camera performance of the electronic products also accordingly becomes one of the focuses concerned by users when selecting products. In addition, the photosensitive element is improved in performance along with the technological progress, thereby providing the possibility of further improving the photographing quality. Particularly, as the photographing demand for dark scenes such as night scenes and starry sky gradually increases, whether the optical system can cooperate with the photosensitive element to take pictures with clear image quality in dark environments becomes one of the key factors for improving the photographing quality of the current camera lens.

**SUMMARY**

According to various embodiments of the present disclosure, an optical system is provided.

An optical lens, sequentially arranged from an object side to an image side, includes:

a first lens having a positive refractive power, an object side surface of the first lens being convex at an optical axis, and an image side surface thereof being concave at the optical axis;

a second lens having a negative refractive power, an object side surface of the second lens being convex at the optical axis, and an image side surface thereof being concave at the optical axis;

a third lens having a refractive power;

a fourth lens having a refractive power;

a fifth lens having a refractive power;

a sixth lens having a negative refractive power;

a seventh lens having a positive refractive power, an object side surface of the seventh lens being convex at the optical axis, and an image side surface thereof being concave at the optical axis; and

an eighth lens having a negative refractive power, an image side surface of the eighth lens being concave at the optical axis;

wherein the optical system satisfies the following condition:

$$0.2 < DL/Imgh < 0.5;$$

wherein DL is a stop aperture size of the optical system, and Imgh is a diagonal length of an effective imaging area of the optical system on an imaging plane.

A camera module includes a photosensitive element and the optical system as described above, the photosensitive element is arranged on an image side of the optical system.

An electronic device includes a fixing member and the camera module as described above, the camera module is disposed on the fixing member.

The details of one or more embodiments of the present disclosure are set forth in the accompanying drawings and the description below. Other features, objects and advantages of the present disclosure will become apparent from the description, the accompanying drawings, and the claims.

**BRIEF DESCRIPTION OF THE DRAWINGS**

To better describe and illustrate embodiments and/or examples of the disclosure disclosed herein, reference can be made to one or more accompanying drawings. The additional details or examples used to describe the accompanying drawings should not be construed as limiting the scope of any of the disclosed disclosure, the presently described embodiments and/or examples, and the presently understood preferred mode of the disclosure.

FIG. 1 is a schematic view of an optical system provided by a first embodiment of the present disclosure;

FIG. 2 is a graph showing a longitudinal spherical aberration diagram (mm), an astigmatism diagram (mm), and a distortion diagram (%) of the optical system in the first embodiment;

FIG. 3 is a schematic view of an optical system provided by a second embodiment of the present disclosure;

FIG. 4 is a graph showing a longitudinal spherical aberration diagram (mm), an astigmatism diagram (mm), and a distortion diagram (%) of the optical system in the second embodiment;

FIG. 5 is a schematic view of an optical system provided by a third embodiment of the present disclosure;

FIG. 6 is a graph showing a longitudinal spherical aberration diagram (mm), an astigmatism diagram (mm), and a distortion diagram (%) of the optical system in the third embodiment;

FIG. 7 is a schematic view of an optical system provided by a fourth embodiment of the present disclosure;

FIG. 8 is a graph showing a longitudinal spherical aberration diagram (mm), an astigmatism diagram (mm), and a distortion diagram (%) of the optical system in the fourth embodiment;

FIG. 9 is a schematic view of an optical system provided by a fifth embodiment of the present disclosure;

FIG. 10 is a graph showing a longitudinal spherical aberration diagram (mm), an astigmatism diagram (mm), and a distortion diagram (%) of the optical system in the fifth embodiment;

FIG. 11 is a schematic view of an optical system provided by a sixth embodiment of the present disclosure;

FIG. 12 is a graph showing a longitudinal spherical aberration diagram (mm), an astigmatism diagram (mm), and a distortion diagram (%) of the optical system in the sixth embodiment;

FIG. 13 is a schematic view of an optical system provided by a seventh embodiment of the present disclosure;

FIG. 14 is a graph showing a longitudinal spherical aberration diagram (mm), an astigmatism diagram (mm), and a distortion diagram (%) of the optical system in the seventh embodiment;

FIG. 15 is a schematic view of a camera module provided by an embodiment of the present disclosure; and

FIG. 16 is a schematic view of an electronic device provided by an embodiment of the present disclosure.

## DETAILED DESCRIPTION OF THE EMBODIMENTS

In order to facilitate the understanding of the present disclosure, the present disclosure will be described more fully hereinafter with reference to the related accompanying drawings. Preferable embodiments of the present disclosure are presented in the accompanying drawings. However, the present disclosure may be embodied in many different forms and is not limited to the embodiments described herein. Rather, the purpose of providing these embodiments is to make the content of the present disclosure more thorough and comprehensive.

It should be noted that when an element is referred to as being "fixed to" another element, it can be directly on another element or indirectly connected to another element with an intermediate element. When an element is considered to be "connected to" another element, it can be directly connected to another element or indirectly connected to another element with an intermediate element. The terms "in", "outer", "left", "right", and the like used herein are for illustrative purposes only and are not intended to be the only embodiments.

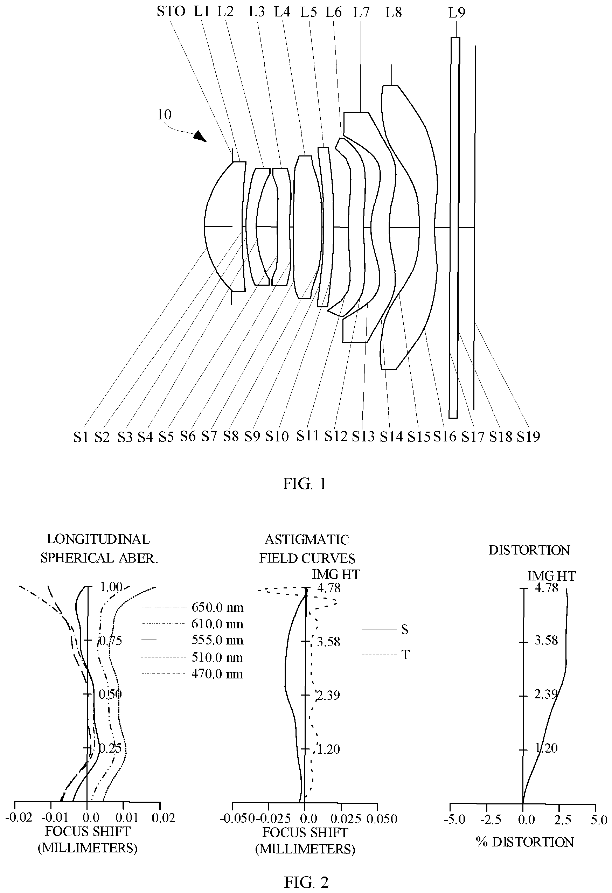

Referring to FIG. 1, in some embodiments of the present disclosure, an optical system 10 includes, sequentially arranged from an object side to an image side, a stop STO, a first lens L1, a second lens L2, a third lens L3, a fourth lens L4, a fifth lens L5, a sixth lens L6, a seventh lens L7, and an eighth lens L8. The first lens L1 to the eighth lens L8 each include only one lens. The first lens L1 has a positive refractive power, the second lens L2 has a negative refractive power, the third lens L3 has a positive refractive power or negative refractive power, the fourth lens L4 has a positive refractive power or negative refractive power, the fifth lens L5 has a positive refractive power or negative refractive power, the sixth lens L6 has a negative refractive power, the seventh lens L7 has a positive refractive power, and the eighth lens L8 has a negative refractive power. The lenses and the stop STO in the optical system 10 are coaxially arranged, that is, the optical axis of each lens and the center of the stop STO are located on the same straight line, which may be referred to as an optical axis of the optical system 10.

The first lens L1 includes an object side surface S1 and an image side surface S2. The second lens L2 includes an object side surface S3 and an image side surface S4. The third lens L3 includes an object side surface S5 and an image side surface S6. The fourth lens L4 includes an object side surface S7 and an image side surface S8. The fifth lens L5 includes an object side surface S9 and an image side surface S10. The sixth lens L6 includes an object side surface S11 and an image side surface S12. The seventh lens L7 includes an object side surface S13 and an image side surface S14. The eighth lens L8 includes an object side surface S15 and an image side surface S16. In addition, the optical system 10 further has a virtual imaging plane S19, and the imaging plane S19 is located on an image side of the eighth lens. Generally, the imaging plane S19 of the optical system 10 coincides with a photosensitive surface of a photosensitive element. To facilitate understanding, the imaging plane S19 can be regarded as the photosensitive surface of the photosensitive element.

In the aforementioned embodiments, the object side surface S1 of the first lens L1 is convex at the optical axis, and the image side surface S2 thereof is concave at the optical axis. The object side surface S3 of the second lens L2 is convex at the optical axis, and the image side surface S4 thereof is concave at the optical axis. The object side surface S13 of the seventh lens is convex at the optical axis, and the image side surface S14 thereof is concave at the optical axis. The image side surface S16 of the eighth lens is concave at the optical axis.

In the aforementioned embodiments, the object side surface and the image side surface of each lens in the optical system 10 are aspherical. That is, the object side surfaces and the image side surfaces of the first lens L1 to the eighth lens L8 are aspherical, and the object side surface S15 and the image side surface S16 of the eighth lens L8 both have an inflection point. The configuration of the aspherical surface shape can further help the optical system 10 to eliminate aberrations and solve the problem of distortion of the field of view. In addition, it is also beneficial to the miniaturization design of the optical system 10, so that the optical system 10 can have excellent optical effects on the premise of maintaining the miniaturization design. Of course, in other embodiments, the object side surface of any one of the first lens L1 to the eighth lens L8 may be spherical or aspherical, and the image side surface of any one of the first lens L1 to the eighth lens L8 may be spherical or aspherical. The problem of aberrations can also be effectively eliminated through the cooperation of the spherical surface and the aspherical surface, so that the optical system 10 has an excellent imaging effect, and the flexibility of lens design and assembly is improved. In particular, when the eighth lens L8 is an aspherical lens, it is beneficial to perform final correction on the aberrations generated by the lenses in front of the eighth lens, so as to facilitate the improvement of the imaging quality. It should be noted that the shape of the spherical surface or the aspherical surface is not limited to the shape of the spherical surface or the aspherical surface shown in the drawings. The drawings are referenced to by way of example only and are not strictly drawn to scale.

A surface shape of the aspherical surface can be calculated by referring to the following aspherical formula:

$$Z = \frac{cr^2}{1 + \sqrt{1 - (k+1)c^2r^2}} + \sum_i Ai\, r^i$$

Where, Z is a distance from a corresponding point on an aspherical surface to a plane tangent to a vertex of the surface, r is a distance from the corresponding point on the aspherical surface to the optical axis, c is a curvature of the aspherical surface vertex, k is a conic coefficient, and Ai is a coefficient corresponding to a high-order term of the $i^{th}$ term in the aspherical surface shape formula.

In another aspect, in some embodiments, when an object side surface or an image side surface of a certain lens is aspherical, the surface can be a convex surface or a concave surface as a whole. Alternatively, the surface may also be designed to have an inflection point, in which the surface shape of the surface changes from center to edge, for example, the surface is convex at the center and concave at the edge. It should be noted that, when describing that a side surface of a lens at the optical axis (a central area of the side surface) is convex in an embodiment of the present disclosure, it can be understood that an area of this side surface of the lens near the optical axis is convex, and thus it can also be considered as that the side surface is convex at a paraxial area thereof. When describing that a side surface of a lens is concave at the circumference thereof, it can be understood that an area of the side surface near the maximum effective radius is concave. For example, when the side surface is convex at the optical axis and also convex at the circumference thereof, a shape of the side surface in a direction from the center (the optical axis) to the edge may be completely convex, or the side surface may be firstly transited from a convex shape at the center to a concave shape, and then become a convex surface at a position close to its maximum effective radius. These are only examples to illustrate various shapes and structures (concave-convex condition) of the side surface at the optical axis and the circumference, and the various shapes and structures (concave-convex condition) of the side surface are not fully described, but other situations can be derived from the above examples, and should be considered as contents disclosed in the present disclosure.

In aforementioned embodiments, the lenses in the optical system 10 are made of plastic. Of course, in some embodiment, the lenses in the optical system 10 are made of glass. The lens made of plastic can reduce the weight of the optical system 10 and reduce the manufacturing cost, while the lens made of glass can withstand higher temperatures and has excellent optical effects. In other embodiments, the first lens L1 is made of glass, and the second lens L2 to the eighth lens L8 are all made of plastic. As such, since the lenses on the object side of the optical system 10 are made of glass, the lenses made of glass on the object side have a good resistance to extreme environments, and are not susceptible to aging and the like due to the impact of the environment on the object side. Therefore, when the optical system 10 is in the extreme environments such as exposed to the sun or in high temperature environment, the optical system 10 having this structure can better balance the optical performance and cost of the system. Of course, the material configuration of each lens in the optical system 10 is not limited to the above embodiments, and any lens may be made of plastic or glass.

In some embodiments, the optical system 10 includes an infrared cut-off filter L9. The infrared cut-off filter L9 is arranged on an image side of the eighth lens L8, and is fixedly arranged relative to each lens in the optical system 10. The infrared cut-off filter L9 includes an object side surface S17 and an image side surface S18. The infrared cut-off filter L9 is used to filter out infrared light and prevent the infrared light from reaching the imaging plane S19 of the system, thereby preventing the infrared light from interfering with normal imaging. The infrared cut-off filter L9 can be assembled with the lenses as a part of the optical system 10. In other embodiments, the infrared cut-off filter L9 is not an element of the optical system 10. In this case, when the optical system 10 and the photosensitive element are assembled into a camera module, the infrared cut-off filter L9 can be mounted between the optical system 10 and the photosensitive element. In some embodiments, the infrared cut-off filter L9 may also be arranged on the object side of the first lens L1. In addition, in some embodiments, the infrared cut-off filter L9 may not be provided, but a filter coating is provided on any one of the first lens L1 to the eighth lens L8 to achieve the effect of filtering the infrared light.

In other embodiments, the first lens L1 may also include two or more lenses. An object side surface of a lens closest to the object side is the object side surface S1 of the first lens L1, and an image side surface of a lens closest to the image side is the image side surface S2 of the first lens L1. Accordingly, in some embodiments, any one of the second lens L2, the third lens L3, the fourth lens L4, the fifth lens L5, the sixth lens L6, the seventh lens L7, and the eighth lens L8 is not limited to the case where only one lens is included.

In some embodiments, the optical system 10 further satisfies the following conditions.

$0.2 < DL/Imgh < 0.5$; where, DL is a stop aperture size of the optical system 10, and Imgh is a diagonal length of an effective imaging area of the optical system 10 on the imaging plane S19. In some embodiments, the DL/Imgh is equal to 0.30, 0.31, 0.33, 0.35, 0.36, or 0.37. The aperture size of the stop STO of the system determines the light flux of the whole system, and the size of the imaging plane S19 determines the pixel size and the image definition of the whole system, and a reasonable cooperation of the two can ensure that the system has a reasonable light flux to ensure the photographing definition. When the optical system 10 satisfies the relationship among the refractive power, the surface shape, and the condition of the above lenses, the light flux of the optical system 10 and the size of the imaging plane S19 can be configured reasonably, so as to effectively improve the photographing quality of the system in a dark environment. When DL/Imgh > 0.5, the system is exposed too much, the brightness is too high, and the image quality is influenced finally. When DL/Imgh < 0.2, the light flux of the system is insufficient, and the relative brightness of the light is insufficient, thereby reducing the image definition.

$0 < sin(FOV)/TTL < 0.2$; where, FOV is a maximum field of view of the optical system 10, and TTL is a distance from the object side surface S1 of the first lens L1 to the imaging plane S19 of the optical system 10 on the optical axis, in unit of mm. In some embodiments, sin(FOV)/TTL is equal to 0.145, 0.15, 0.155, or 0.16, and in numerical unit of (1/mm). When the above condition is satisfied, the optical system 10 can satisfy both the miniaturization and the effect of large-scale scene photographing, and also can satisfy the requirement of high-definition photographing. When sin(FOV)/TTL > 0.2, the structure of the system is too compact, and it is difficult to correct aberrations, resulting in that the imaging performance is reduced. When sin(FOV)/TTL < 0, the structure of the system is too long, and it is difficult to meet the miniaturization design requirements.

$Fno/TTL < 0.5$; where Fno is an f-number of the optical system 10, and TTL is a distance from the object side surface S1 of the first lens L1 to the imaging plane S19 of the optical system 10 on the optical axis, in unit of mm. In some embodiments, Fno/TTL is equal to 0.23, 0.24, 0.25, 0.26, 0.27, 0.28, or 0.29, and in numerical unit of (1/mm). When the above condition is satisfied, the optical system 10 can take into account design requirements of both large aperture and miniaturization, and provide sufficient light flux for photographing, thereby satisfying the needs of high-quality and high-definition photographing. When Fno/TTL > 0.5, the light flux of the system is insufficient while taking into account the miniaturization of the system, which results in a reduced definition of the photographed image.

$0.1 \leq BFL/TTL < 0.4$; where, BFL is a shortest distance from the image side surface S16 of the eighth lens L8 to the imaging plane S19 of the optical system 10 in a direction parallel to the optical axis, and TTL is a distance from the object side surface S1 of the first lens L1 to the imaging plane S19 of the optical system 10 on the optical axis. In some embodiments, the BFL/TTL is equal to 0.10, 0.11, 0.12, 0.13, or 0.14. When the above condition is satisfied, it can ensure that the system has a sufficient focusing scope in order to improve the assembly yield of module, and in addition, ensure that the system has great depth of focus in order to acquire more depth information at the object side.

$-4 < f6/f7 < 0$; where f6 is an effective focal length of the sixth lens L6, and f7 is an effective focal length of the seventh lens L7. In some embodiments, f6/f7 is equal to -3.25, -3.20, -3.10, -3.00, -2.80, -2.60, -2.50, -2.40, or -2.30. The sixth lens L6 provides negative refractive power to diverge light for satisfying the requirement of image height, and the seventh lens L7 provides positive refractive power to facilitate light convergence. When the above condition is satisfied, the refractive power of the two lenses will be reasonably distributed, so that not only the system volume can be effectively compressed to achieve the requirement of the miniaturization design, but also the aberration and the curvature of field of the whole optical system 10 can be well corrected.

$0.2 < DL/TTL < 1$; where, DL is a stop aperture size of the optical system 10, and TTL is a distance from the object side surface S1 of the first lens L1 to the imaging plane S19 of the optical system 10 on the optical axis. In some embodiments, the DL/TTL is equal to 0.42, 0.43, 0.44, 0.45, 0.46, 0.48, or 0.50. When the above condition is satisfied, the miniaturization design of the system can be ensured, and the light flux required by the system for photographing can be provided, so that high-quality and high-definition photographing effects can be achieved. When DL/TTL > 1, the system may cause the light-passing aperture of the stop STO to be overlarge when meeting the miniaturization design, so that marginal light enter the system, and further the imaging quality is reduced. When DL/TTL < 0.2, the system may cause the light-passing aperture of the stop STO to be too small while meeting the miniaturization design, so that the requirement of the light flux of the system cannot be met, and the high-definition photographing requirement under the dark light environment cannot be achieved.

TTL/Imgh < 1; where, TTL is a distance from the object side surface S1 of the first lens L1 to the imaging plane S19 of the optical system 10 on the optical axis, and Imgh is a diagonal length of an effective imaging area of the optical system 10 on the imaging plane S19. In some embodiments, the TTL/Imgh is equal to 0.70, 0.71, 0.72, 0.73, or 0.74. When the above condition is satisfied, the optical system 10 can achieve both the miniaturization design and the high-definition photographing. When TTL/Imgh > 1, the system cannot ensure high-definition imaging effect while achieving miniaturization.

1.0 < TTL/f < 2.0; where, TTL is a distance from the object side surface S1 of the first lens L1 to the imaging plane S19 of the optical system 10 on the optical axis, and f is an effective focal length of the optical system 10. In some embodiments, the TTL/f is equal to 1.21, 1.22, 1.24, 1.25, 1.27, 1.29, or 1.30. When the above condition is satisfied, the effective focal length and the total optical length of the optical system 10 can be reasonably configured, which can not only achieve the miniaturization design, but also ensure that the light is better converged on the imaging plane S19 of the system, so as to facilitate the improvement of the imaging quality and ensure the authenticity of image. When TTL/f $\leq$ 1.0, the optical length of the system is too short, which may increase the sensitivity of the system, and it is also not beneficial to the convergence of light on the imaging plane S19. When TTL/f $\geq$ 2, the optical length of the system is too long, which may cause the chief ray angle when the light enters the imaging plane S19 to be too large, so that the marginal light cannot be imaged on the imaging plane S19, thereby further causing incomplete imaging information.

0 < R11/R12 < 3.5; where, R11 is a radius of curvature of the object side surface S11 of the sixth lens L6 at the optical axis, and R12 is a radius of curvature of the image side surface S12 of the sixth lens L6 at the optical axis. In some embodiments, R11/R12 is equal to 0.60, 0.70, 0.80, 1.00, 1.20, 1.50, 1.80, 2.00, 2.10, 2.30, 2.50, 2.60, or 2.70. When the above condition is satisfied, the radii of curvature the object side surface S11 and the image side surface S12 of the sixth lens L6 can be configured appropriately, which is beneficial to reduce the sensitivity of the system and increase the molding yield.

Next, the optical system 10 of the present disclosure will be described in more specific and detailed embodiments.

First Embodiment

Referring to FIGS. 1 and 2, in the first embodiment, the optical system 10 includes, sequentially arranged from an object side to an image side, a stop STO, a first lens L1 having a positive refractive power, a second lens L2 having a negative refractive power, a third lens L3 having a negative refractive power, a fourth lens L4 having a positive refractive power, a fifth lens L5 having a negative refractive power, a sixth lens L6 having a negative refractive power, a seventh lens L7 having a positive refractive power, and an eighth lens L8 having a negative refractive power. A longitudinal spherical aberration diagram (mm), an astigmatism diagram (mm), and a distortion diagram (%) of the optical system 10 in the first embodiment are included in FIG. 2. Ordinates of the astigmatism diagram and the distortion diagram can be understood as half of a diagonal length of an effective imaging area on an imaging plane S19, in unit of mm. In addition, the astigmatism diagram and the distortion diagram are graphs at a wavelength of 555 nm.

An object side surface S1 of the first lens L1 is convex at the optical axis, and an image side surface S2 thereof is concave at the optical axis. The object side surface S1 of the first lens L1 is convex at the circumference thereof, and the image side surface S2 thereof is concave at the circumference thereof.

An object side surface S3 of the second lens L2 is convex at the optical axis, and an image side surface S4 thereof is concave at the optical axis. The object side surface S3 of the second lens L2 is convex at the circumference thereof, and the image side surface S4 thereof is concave at the circumference thereof.

An object side surface S5 of the third lens L3 is convex at the optical axis, and an image side surface S6 thereof is concave at the optical axis. The object side surface S5 of the third lens L3 is concave at the circumference thereof, and the image side surface S6 thereof is convex at the circumference thereof.

An object side surface S7 of the fourth lens L4 is convex at the optical axis, and an image side surface S8 thereof is convex at the optical axis. The object side surface S7 of the fourth lens L4 is convex at the circumference thereof, and the image side surface S8 thereof is concave at the circumference thereof.

An object side surface S9 of the fifth lens L5 is concave at the optical axis, and an image side surface S10 thereof is convex at the optical axis. The object side surface S9 of the fifth lens L5 is concave at the circumference thereof, and the image side surface S10 thereof is convex at the circumference thereof.

An object side surface S11 of the sixth lens L6 is convex at the optical axis, and an image side surface S12 thereof is concave at the optical axis. The object side surface S11 of the sixth lens L6 is concave at the circumference thereof, and the image side surface S12 thereof is convex at the circumference thereof.

An object side surface S13 of the seventh lens L7 is convex at the optical axis, and an image side surface S14 thereof is concave at the optical axis. The object side surface S13 of the seventh lens L7 is concave at the circumference thereof, and the image side surface S14 thereof is convex at the circumference thereof.

An object side surface S15 of the eighth lens L8 is concave at the optical axis, and an image side surface S16 thereof is concave at the optical axis. The obj ect side surface S15 of the eighth lens L8 is concave at the circumference thereof, and the image side surface S16 thereof is concave at the circumference thereof.

The object side surfaces and the image side surfaces of the first lens L1 to the eighth lens L8 are all aspherical, and the object side surface S15 and the image side surface S16 of the eighth lens L8 both have inflection points. By matching the aspherical surface shapes of the lenses in the optical system 10, the problem of distortion of the field of view of the optical system 10 can be effectively solved, and the lenses can achieve excellent optical effects even when the lenses are small and thin. As such, the optical system 10 has a smaller volume, which is beneficial to the miniaturization design of the optical system 10. In addition, the lenses in the optical system 10 are all made of plastic. The adoption of the lenses made of plastic can reduce the manufacturing cost of the optical system 10.

In the first embodiment, the optical system 10 satisfies the following conditions.

DL/Imgh = 0.37; where DL is a stop aperture size of the optical system 10, and Imgh is a diagonal length of an effective imaging area of the optical system 10 on the imaging plane S19. The stop aperture size of the system determines the light flux of the whole system, and the size of the imaging plane S19 determines the pixel size and the image definition of the whole system, and a reasonable cooperation of the two can ensure that the system has a reasonable light flux to ensure the photographing definition. When the optical system 10 satisfies the relationship among the refractive power, the surface shape, and the condition of the above lenses, the light flux of the optical system 10 and the size of the imaging plane S19 can be configured reasonably, so as to effectively improve the photographing quality of the system in a dark environment.

sin(FOV)/TTL = 0.14 (1/mm); where, FOV is a maximum field of view of the optical system 10, and TTL is a distance from the object side surface S1 of the first lens L1 to the imaging plane S19 of the optical system 10 on the optical axis, in unit of mm. When the above condition is satisfied, the optical system 10 can satisfy both the miniaturization and the effect of large-scale scene photographing, and also can satisfy the requirement of high-definition photographing.

Fno/TTL = 0.24 (1/mm); where Fno is an f-number of the optical system 10, and TTL is a distance from the object side surface S1 of the first lens L1 to the imaging plane S19 of the optical system 10 on the optical axis, in unit of mm. When the above condition is satisfied, the optical system 10 can take into account design requirements of both large aperture and miniaturization, and provide sufficient light flux for photographing, thereby satisfying the needs of high-quality and high-definition photographing.

BFL/TTL = 0.14; where, BFL is a shortest distance from the image side surface S16 of the eighth lens L8 to the imaging plane S19 of the optical system 10 in a direction parallel to the optical axis, and TTL is a distance from the object side surface S1 of the first lens L1 to the imaging plane S19 of the optical system 10 on the optical axis. When the above condition is satisfied, it can ensure that the system has a sufficient focusing scope in order to improve the assembly yield of module, and in addition, ensure that the system has great depth of focus in order to acquire more depth information at the object side.

f6/f7 = -3.08; where f6 is an effective focal length of the sixth lens L6, and f7 is an effective focal length of the seventh lens L7. The sixth lens L6 provides negative refractive power to diverge light for satisfying the requirement of image height, and the seventh lens L7 provides positive refractive power to facilitate light convergence. When the above condition is satisfied, the refractive power of the two lenses will be reasonably distributed, so that not only the system volume can be effectively compressed to achieve the requirement of the miniaturization design, but also the aberration and the curvature of field of the whole optical system 10 can be well corrected.

DL/TTL = 0.51; where, DL is a stop aperture size of the optical system 10, and TTL is a distance from the object side surface S1 of the first lens L1 to the imaging plane S19 of the optical system 10 on the optical axis. When the above condition is satisfied, the miniaturization design of the system can be ensured, and the light flux required by the system for photographing can be provided, so that high-quality and high-definition photographing effects can be achieved.

TTL/Imgh = 0.73; where, TTL is a distance from the object side surface S1 of the first lens L1 to the imaging plane S19 of the optical system 10 on the optical axis, and Imgh is a diagonal length of an effective imaging area of the optical system 10 on the imaging plane S19. When the above condition is satisfied, the optical system 10 can achieve both the miniaturization design and the high-definition photographing.

TTL/f = 1.21; where, TTL is a distance from the object side surface S1 of the first lens L1 to the imaging plane S19 of the optical system 10 on the optical axis, and f is an effective focal length of the optical system 10. When the above condition is satisfied, the effective focal length and the total optical length of the optical system 10 can be reasonably configured, which can not only achieve the miniaturization design, but also ensure that the light is better converged on the imaging plane S19 of the system, so as to facilitate the improvement of the imaging quality and ensure the authenticity of image.

R11/R12 = 2.03; where, R11 is a radius of curvature of the object side surface S11 of the sixth lens L6 at the optical axis, and R12 is a radius of curvature of the image side surface S12 of the sixth lens L6 at the optical axis. When the above condition is satisfied, the radii of curvature the object side surface S11 and the image side surface S12 of the sixth lens L6 can be configured appropriately, which is beneficial to reduce the sensitivity of the system and increase the molding yield.

In addition, various lens parameters of the optical system 10 are given in Table 1 and Table 2. Table 2 shows the aspherical coefficients of the lenses in Table 1, in which k is a conic coefficient, and Ai is a coefficient corresponding to a high-order term of the $i^{th}$ term in the aspherical surface shape formula. The elements from the object plane to the image plane (the imaging plane S19, which can also be understood as a photosensitive surface of a photosensitive element during later assembly) are arranged in the order of the elements in Table 1 from top to bottom. A subject on the object plane can be imaged clearly on the imaging plane S19 of the optical system 10. The surface numbers 1 and 2 indicate the object side surface S1 and the image side surface S2 of the first lens L1, respectively. That is, in the same lens, a surface with the smaller surface number is an object side surface, and a surface with the larger surface number is an image side surface. The Y radius in Table 1 is a radius of curvature of the object side surface or image side surface indicated by corresponding surface number on the optical axis. In the "thickness" parameter column of a lens, the first value is a thickness of the lens on the optical axis, and the second value is a distance from the image side surface of the lens to the object side surface of the latter optical element on the optical axis. The value of the stop STO in the "thickness" parameter column is a distance from the stop STO to the vertex (the vertex refers to the intersection of the lens and the optical axis) of the object side surface of the latter lens on the optical axis. Here, the default is that the direction from the object side surface of the first lens L1 to the image side surface of the last lens is the positive direction of the optical axis. When the value is negative, it indicates that the stop STO is arranged on the right side of the vertex of the object side surface of the lens. When the value of the "thickness" parameter of the stop STO is positive, the stop STO is on the left side of the vertex of the object side surface of the lens. In the embodiment of the present disclosure, the optical axes of the lenses are on the same straight line. The straight line is used as the optical axis of the optical system 10. It should be noted that in the following embodiments, the infrared cut-off filter L9 may be used as an element in the optical system 10, or may not be used as an element in the optical system 10.

In the first embodiment, the effective focal length of the optical system 10 is indicated by f, and f=5.55 mm. The f-number is indicated by FNO, and FNO=1.63. The maximum field of view (i.e., field of view in the diagonal direction) is indicated by FOV, and FOV=77.61°. The total optical length is indicated by TTL, and TTL=6.74mm.

In addition, in the following embodiments (the first embodiment to the seventh embodiment), the refractive indexes, the abbe numbers, and the focal lengths of the lenses are values at a wavelength of 555nm. In addition, the calculation of the conditions and the structures of the lenses in each embodiment are based on the parameters of the lenses (such as parameters in Table 1, Table 2, Table 3, Table 4, etc.).

Table 1

| First Embodiment | | | | | | | | |
|---|---|---|---|---|---|---|---|---|
| f=5.55mm, FNO=1.63, FOV=77.61°, TTL=6.74mm | | | | | | | | |
| Surface Number | Surface Name | Surface Shape | Y radius (mm) | Thickness (mm) | Material | Refractive index | Abbe number | Focal Length (mm) |
| | | Spherical | Infinite | Infinite | | | | |
| | | Spherical | Infinite | -0.689 | | | | |
| 1 | First lens | Aspherical | 2.366 | 0.940 | Plastic | 1.55 | 56.14 | 5.13 |
| 2 | | Aspherical | 13.100 | 0.100 | | | | |
| 3 | Second lens | Aspherical | 4.992 | 0.259 | Plastic | 1.67 | 20.35 | -12.81 |
| 4 | | Aspherical | 3.086 | 0.523 | | | | |
| 5 | Third lens | Aspherical | 13.762 | 0.307 | Plastic | 1.67 | 20.35 | -23.65 |
| 6 | | Aspherical | 7.284 | 0.089 | | | | |
| 7 | Fourth lens | Aspherical | 14.527 | 0.714 | Plastic | 1.55 | 56.14 | 11.01 |
| 8 | | Aspherical | -10.076 | 0.038 | | | | |

(continued)

| Surface Number | Surface Name | Surface Shape | Y radius (mm) | Thickness (mm) | Material | Refractive index | Abbe number | Focal Length (mm) |
|---|---|---|---|---|---|---|---|---|
| | | **First Embodiment** | | | | | | |
| | | f=5.55mm, FNO=1.63, FOV=77.61°, TTL=6.74mm | | | | | | |
| 9 | Fifth lens | Aspherical | -13.543 | 0.250 | Plastic | 1.55 | 56.14 | -188.45 |
| 10 | | Aspherical | -15.698 | 0.373 | | | | |
| 11 | Sixth lens | Aspherical | 12.013 | 0.375 | Plastic | 1.64 | 23.80 | -18.64 |
| 12 | | Aspherical | 5.914 | 0.184 | | | | |
| 13 | Seventh lens | Aspherical | 1.947 | 0.462 | Plastic | 1.55 | 56.14 | 6.05 |
| 14 | | Aspherical | 4.349 | 0.753 | | | | |
| 15 | Eighth lens | Aspherical | -6.428 | 0.376 | Plastic | 1.55 | 56.14 | -4.67 |
| 16 | | Aspherical | 4.306 | 0.386 | | | | |
| 17 | Infrared Cut-off Filter | Spherical | Infinite | 0.210 | Glass | | | |
| 18 | | Spherical | Infinite | 0.399 | | | | |
| | | Spherical | Infinite | 0.000 | | | | |
| | | Note: The reference wavelength is 555 nm | | | | | | |

Table 2

| Surface number | 1 | 2 | 3 | 4 | 5 | 6 | 7 | 8 |
|---|---|---|---|---|---|---|---|---|
| k | -1.051E+00 | -8.906E+00 | -1.892E+00 | -1.250E+00 | -3.240E+00 | -6.445E-01 | -3.961E+00 | -1.891E+00 |
| A4 | 8.760E-03 | -1.486E-02 | -2.980E-02 | -1.203E-02 | -4.131E-02 | -3.780E-02 | -9300E-03 | -1.598E-02 |
| A6 | 5.360E-03 | 1.947E-02 | 3.265E-02 | 1.525E-02 | 4.900E-04 | -2.176E-02 | -3.374E-02 | -1.258E-02 |
| A8 | -8.590E-03 | -1.418E-02 | -2.062E-02 | 8.130E-03 | -6.390E-03 | 4.949E-02 | 7.031E-02 | 1.551E-02 |
| A10 | 1.046E-02 | 4.570E-03 | 3.950E-03 | -4.009E-02 | 2.200E-03 | -7.323E-02 | -8.741E-02 | -1.363E-02 |
| A12 | -7.970E-03 | 1.330E-03 | 7.020E-03 | 5.810E-02 | -1.820E-03 | 6.248E-02 | 6.672E-02 | 8.430E-03 |
| A14 | 3.860E-03 | -2.010E-03 | -7.500E-03 | -4.660E-02 | 8200E-04 | -3.217E-02 | -3.007E-02 | -3.130E-03 |
| A16 | -1.150E-03 | 8.500E-04 | 3.530E-03 | 2.179E-02 | -8.000E-05 | 1.030E-02 | 7.890E-03 | 6.800E-04 |
| A18 | 1.900E-04 | -1.600E-04 | -8.300E-04 | -5.530E-03 | 0.000E+00 | -1.920E-03 | -1.120E-03 | -8.000E-05 |
| A20 | -1.000E-05 | 1.000E-05 | 8.000E-05 | 5.900E-04 | 0.000E+00 | 1.600E-04 | 7.000E-05 | 0.000E+00 |
| Surface number | 9 | 10 | 11 | 12 | 13 | 14 | 15 | 16 |
| k | 0.000E+00 | 0.000E+00 | -8.504E+00 | -3.849E+00 | -1.148E+00 | -7.414E-01 | -8.759E-01 | -1.500E+00 |
| A4 | 0.000E+00 | 0.000E+00 | 1.630E-03 | -7.591E-02 | -4.879E-02 | 8.420E-02 | -4.049E-02 | -6288E-02 |
| A6 | 0.000E+00 | 0.000E+00 | -1.687E-02 | 1.896E-02 | -4.601E-02 | -1.346E-01 | -9.640E-03 | 8.690E-03 |
| A8 | 0.000E+00 | 0.000E+00 | 3.134E-02 | 3.158E-02 | 3.245E-02 | 7.710E-02 | 8.760E-03 | 1.200E-03 |
| A10 | 0.000E+00 | 0.000E+00 | -3.108E-02 | -3.496E-02 | -8.310E-03 | -2.676E-02 | -2.090E-03 | -6.700E-04 |
| A12 | 0.000E+00 | 0.000E+00 | 1.619E-02 | 1.607E-02 | -1.700E-04 | 5.880E-03 | 2.600E-04 | 1.200E-04 |
| A14 | 0.000E+00 | 0.000E+00 | -5.070E-03 | -4.150E-03 | 5.300E-04 | -8.100E-04 | -2.000E-05 | -1.000E-05 |
| A16 | 0.000E+00 | 0.000E+00 | 9.700E-04 | 6300E-04 | -1.200E-04 | 7.000E-05 | 0.000E+00 | 0.000E+00 |
| A18 | 0.000E+00 | 0.000E+00 | -1.100E-04 | -5.000E-05 | 1.000E-05 | 0.000E+00 | 0.000E+00 | 0.000E+00 |
| A20 | 0.000E+00 | 0.000E+00 | 1.000E-05 | 0.000E+00 | 0.000E+00 | 0.000E+00 | 0.000E+00 | 0.000E+00 |

Second Embodiment

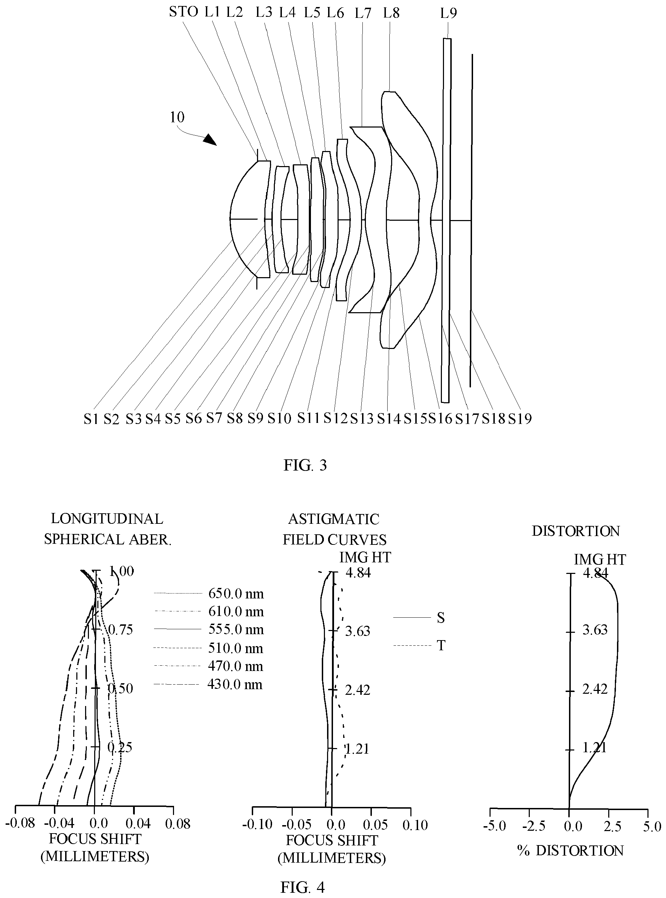

Referring to FIGS. 3 and 4, in the second embodiment, the optical system 10 includes, sequentially arranged from an object side to an image side, a stop STO, a first lens L1 having a positive refractive power, a second lens L2 having a negative refractive power, a third lens L3 having a negative refractive power, a fourth lens L4 having a positive refractive power, a fifth lens L5 having a positive refractive power, a sixth lens L6 having a negative refractive power, a seventh lens L7 having a positive refractive power, and an eighth lens L8 having a negative refractive power. A longitudinal spherical aberration diagram (mm), an astigmatism diagram (mm), and a distortion diagram (%) of the optical system 10 in the second embodiment are included in FIG. 4. The astigmatism diagram and the distortion diagram are graphs at a wavelength of 555 nm.

An object side surface S1 of the first lens L1 is convex at the optical axis, and an image side surface S2 thereof is concave at the optical axis. The object side surface S1 of the first lens L1 is convex at the circumference thereof, and the image side surface S2 thereof is concave at the circumference thereof.

An object side surface S3 of the second lens L2 is convex at the optical axis, and an image side surface S4 thereof is concave at the optical axis. The object side surface S3 of the second lens L2 is convex at the circumference thereof, and the image side surface S4 thereof is concave at the circumference thereof.

An object side surface S5 of the third lens L3 is concave at the optical axis, and an image side surface S6 thereof is convex at the optical axis. The object side surface S5 of the third lens L3 is concave at the circumference thereof, and the image side surface S6 thereof is convex at the circumference thereof.

An object side surface S7 of the fourth lens L4 is convex at the optical axis, and an image side surface S8 thereof is concave at the optical axis. The object side surface S7 of the fourth lens L4 is convex at the circumference thereof, and the image side surface S8 thereof is concave at the circumference thereof.

An object side surface S9 of the fifth lens L5 is convex at the optical axis, and an image side surface S10 thereof is convex at the optical axis. The object side surface S9 of the fifth lens L5 is convex at the circumference thereof, and the image side surface S10 thereof is concave at the circumference thereof.

An object side surface S11 of the sixth lens L6 is concave at the optical axis, and an image side surface S12 thereof is convex at the optical axis. The object side surface S11 of the sixth lens L6 is convex at the circumference thereof, and the image side surface S12 thereof is convex at the circumference thereof.

An object side surface S13 of the seventh lens L7 is convex at the optical axis, and an image side surface S14 thereof is concave at the optical axis. The object side surface S13 of the seventh lens L7 is concave at the circumference thereof, and the image side surface S14 thereof is convex at the circumference thereof.

An object side surface S15 of the eighth lens L8 is convex at the optical axis, and an image side surface S16 thereof is concave at the optical axis. The object side surface S15 of the eighth lens L8 is concave at the circumference thereof, and the image side surface S16 thereof is concave at the circumference thereof.

In addition, various parameters of the lenses of the optical system 10 in the second embodiment are given in Table 3 and Table 4. Definitions of the various structures and parameters can be obtained from the first embodiment, and which will not be repeated herein.

Table 3

| Second Embodiment | | | | | | | | |
|---|---|---|---|---|---|---|---|---|
| f=5.37mm, FNO=1.58, FOV=80.13°, TTL=6.66mm | | | | | | | | |
| Surface Number | Surface Name | Surface Shape | Y radius (mm) | Thickness (mm) | Material | Refractive index | Abbe number | Focal Length (mm) |
| | Object plane | Spherical | Infinite | Infinite | | | | |
| | Stop | Spherical | Infinite | -0.752 | | | | |
| 1 | First lens | Aspherical | 2.310 | 0.961 | Plastic | 1.55 | 56.14 | 6.69 |
| 2 | | Aspherical | 5.368 | 0.191 | | | | |
| 3 | Second lens | Aspherical | 4.608 | 0.249 | Plastic | 1.67 | 20.35 | -54.14 |
| 4 | | Aspherical | 4.004 | 0.470 | | | | |
| 5 | Third lens | Aspherical | -22.046 | 0.320 | Plastic | 1.67 | 20.35 | -42.30 |
| 6 | | Aspherical | -101.483 | 0.030 | | | | |

(continued)

| Second Embodiment | | | | | | | | |
|---|---|---|---|---|---|---|---|---|
| f=5.37mm, FNO=1.58, FOV=80.13°, TTL=6.66mm | | | | | | | | |
| Surface Number | Surface Name | Surface Shape | Y radius (mm) | Thickness (mm) | Material | Refractive index | Abbe number | Focal Length (mm) |
| 7 | Fourth lens | Aspherical | 9.818 | 0.359 | Plastic | 1.55 | 56.14 | 33.16 |
| 8 | | Aspherical | 21.179 | 0.050 | | | | |
| 9 | Fifth lens | Aspherical | 15.873 | 0.351 | Plastic | 1.55 | 56.14 | 28.23 |
| 10 | | Aspherical | -524.355 | 0.334 | | | | |
| 11 | Sixth lens | Aspherical | -2.830 | 0.320 | Plastic | 1.64 | 23.80 | -10.92 |
| 12 | | Aspherical | -5.271 | 0.100 | | | | |
| 13 | Seventh lens | Aspherical | 2.271 | 0.587 | Plastic | 1.55 | 56.14 | 4.90 |
| 14 | | Aspherical | 13.727 | 0.884 | | | | |
| 15 | Eighth lens | Aspherical | 4.639 | 0.336 | Plastic | 1.55 | 56.14 | -4.82 |
| 16 | | Aspherical | 1.636 | 0.328 | | | | |
| 17 | Infrared Cut-off Filter | Spherical | Infinite | 0.210 | Glass | | | |
| 18 | | Spherical | Infinite | 0.561 | | | | |
| | Image plane | Spherical | Infinite | 0.023 | | | | |
| Note: The reference wavelength is 555 nm | | | | | | | | |

Table 4

| Surface number | 1 | 2 | 3 | 4 | 5 | 6 | 7 | 8 |
|---|---|---|---|---|---|---|---|---|
| k | -6.609E-01 | -2.005E+01 | -6262E+00 | 9.302E-01 | -9.159E+01 | -9.900E+01 | -5.437E+01 | 8.599E+0 1 |
| A4 | 6.180E-03 | -5.510E-03 | -4.815E-02 | -3.245E-02 | 2.423E-02 | 4.264E-02 | -2.900E-04 | -1.424E-02 |
| A6 | 9.630E-03 | -7.000E-04 | 1.017E-02 | -1.249E-02 | -5.210E-02 | -1.259E-01 | -8.343E-02 | -2.665E-02 |
| A8 | -2.140E-02 | -4.670E-03 | -3.123E-02 | 4.484E-02 | 7.462E-02 | 1.836E-01 | 9.284E-02 | -1.890E-03 |
| A10 | 3.240E-02 | 1.351E-02 | 7.500E-02 | -8.184E-02 | -1.144E-01 | -1.748E-01 | -4.169E-02 | 2.382E-02 |
| A12 | -2.907E-02 | -1.653E-02 | -8.250E-02 | 1.164E-01 | 1.259E-01 | 1.135E-01 | -7.700E-04 | -2.144E-02 |
| A14 | 1.598E-02 | 1.170E-02 | 5334E-02 | -1.035E-01 | -9.567E-02 | -5.222E-02 | 1.018E-02 | 9.820E-03 |
| A16 | -5260E-03 | -4.890E-03 | -2.080E-02 | 5.436E-02 | 4.626E-02 | 1.657E-02 | -4.820E-03 | -2.500E-03 |
| A18 | 9.600E-04 | 1.120E-03 | 4.530E-03 | -1.550E-02 | -1.267E-02 | -3.230E-03 | 9.700E-04 | 3.400E-04 |
| A20 | -7.000E-05 | -1.100E-04 | -4.200E-04 | 1.870E-03 | 1.500E-03 | 2.900E-04 | -7.000E-05 | -2.000E-05 |
| Surface number | 9 | 10 | 11 | 12 | 13 | 14 | 15 | 16 |
| k | 0.000E+00 | -9.900E+01 | -2.671E+00 | -3.932E+00 | -5.715E+00 | 0.000E+00 | -7.172E+01 | -8.301E+00 |
| A4 | -1.476E-02 | -1.411E-02 | 8.916E-02 | -4267E-02 | -2.759E-02 | 5.966E+00 | -1.495E-01 | -7232E-02 |
| A6 | -3.302E-02 | -2.937E-02 | -1.370E-01 | -2.445E-02 | 1.055E-02 | 5.847E-02 | 5.444E-02 | 2251E-02 |
| A8 | 1.513E-02 | 1.410E-02 | 1.179E-01 | 4.581E-02 | -6.600E-03 | -4.850E-02 | -1.573E-02 | -5.020E-03 |
| A10 | 5.080E-03 | -7.900E-04 | -6.975E-02 | -2.973 E-02 | 3.140E-03 | 2.163E-02 | 3.670E-03 | 7.000E-04 |
| A12 | -8.890E-03 | -1.720E-03 | 2.917E-02 | 1.159E-02 | -1.270E-03 | -6.730E-03 | -5.800E-04 | -5.000E-05 |
| A14 | 3.850E-03 | 4.000E-04 | -8.040E-03 | -2.790E-03 | 3.500E-04 | 1.400E-03 | 6.000E-05 | 0.000E+00 |
| A16 | -5.800E-04 | 1.800E-04 | 1.360E-03 | 4.000E-04 | -6.000E-05 | -1.900E-04 | 0.000E+00 | 0.000E+00 |
| A18 | -2.000E-05 | -8.000E-05 | -1.300E-04 | -3.000E-05 | 1.000E-05 | 2.000E-05 | 0.000E+00 | 0.000E+00 |
| A20 | 1.000E-05 | 1.000E-05 | 1.000E-05 | 0.000E+00 | 0.000E+00 | 0.000E+00 | 0.000E+00 | 0.000E+00 |

The optical system 10 in this embodiment satisfies the following relationships:

| Second Embodiment | | | |
|---|---|---|---|
| DL/Imgh | 0.37 | DL/TTL | 0.51 |
| sin(FOV)/TTL | 0.15 | TTL/Imgh | 0.72 |
| Fno/TTL | 0.24 | TTL/f | 1.24 |
| BFL/TTL | 0.14 | R11/R12 | 0.54 |
| f6/f7 | -2.23 | | |

Third Embodiment

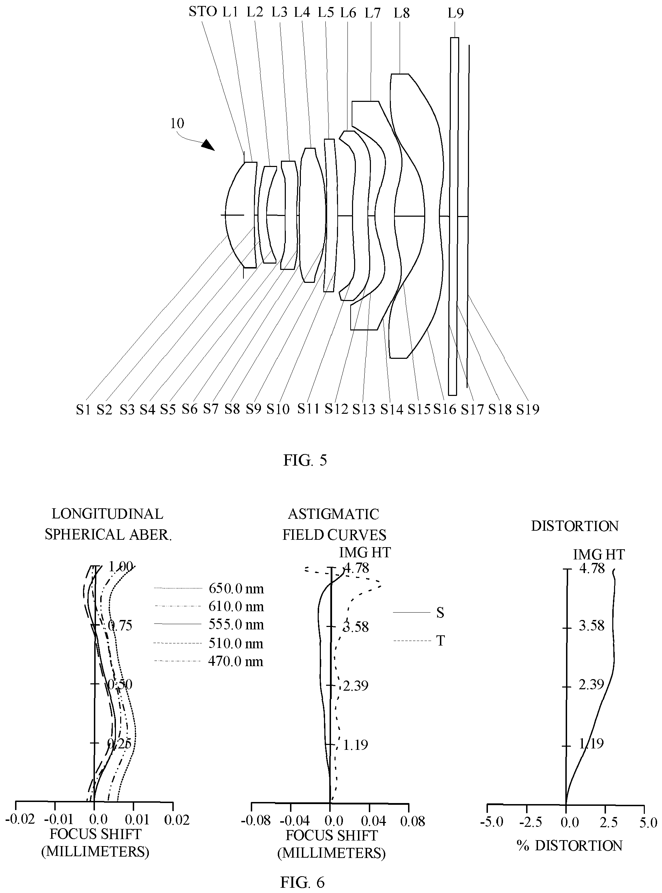

Referring to FIGS. 5 and 6, in the third embodiment, the optical system 10 includes, sequentially arranged from an object side to an image side, a stop STO, a first lens L1 having a positive refractive power, a second lens L2 having a negative refractive power, a third lens L3 having a negative refractive power, a fourth lens L4 having a positive refractive power, a fifth lens L5 having a positive refractive power, a sixth lens L6 having a negative refractive power, a seventh lens L7 having a positive refractive power, and an eighth lens L8 having a negative refractive power. A longitudinal spherical aberration diagram (mm), an astigmatism diagram (mm), and a distortion diagram (%) of the optical system 10 in the third embodiment are included in FIG. 6. The astigmatism diagram and the distortion diagram are graphs at a wavelength of 555 nm.

An object side surface S1 of the first lens L1 is convex at the optical axis, and an image side surface S2 thereof is concave at the optical axis. The object side surface S1 of the first lens L1 is convex at the circumference thereof, and the image side surface S2 thereof is concave at the circumference thereof.

An object side surface S3 of the second lens L2 is convex at the optical axis, and an image side surface S4 thereof is concave at the optical axis. The object side surface S3 of the second lens L2 is convex at the circumference thereof, and the image side surface S4 thereof is concave at the circumference thereof.

An object side surface S5 of the third lens L3 is convex at the optical axis, and an image side surface S6 thereof is concave at the optical axis. The object side surface S5 of the third lens L3 is concave at the circumference thereof, and the image side surface S6 thereof is convex at the circumference thereof.

An object side surface S7 of the fourth lens L4 is convex at the optical axis, and an image side surface S8 thereof is convex at the optical axis. The object side surface S7 of the fourth lens L4 is convex at the circumference thereof, and the image side surface S8 thereof is concave at the circumference thereof.

An object side surface S9 of the fifth lens L5 is concave at the optical axis, and an image side surface S10 thereof is convex at the optical axis. The object side surface S9 of the fifth lens L5 is concave at the circumference thereof, and the image side surface S10 thereof is convex at the circumference thereof.

An object side surface S11 of the sixth lens L6 is convex at the optical axis, and an image side surface S12 thereof is concave at the optical axis. The object side surface S11 of the sixth lens L6 is concave at the circumference thereof, and the image side surface S12 thereof is convex at the circumference thereof.

An object side surface S13 of the seventh lens L7 is convex at the optical axis, and an image side surface S14 thereof is concave at the optical axis. The object side surface S13 of the seventh lens L7 is concave at the circumference thereof, and the image side surface S14 thereof is convex at the circumference thereof.

An object side surface S15 of the eighth lens L8 is concave at the optical axis, and an image side surface S16 thereof is concave at the optical axis. The object side surface S15 of the eighth lens L8 is concave at the circumference thereof, and the image side surface S16 thereof is concave at the circumference thereof.

In addition, various parameters of the lenses of the optical system 10 in the third embodiment are given in Table 5 and Table 6. Definitions of the various structures and parameters can be obtained from the first embodiment, and which will not be repeated herein.

Table 5

| Third Embodiment | | | | | | | | |
|---|---|---|---|---|---|---|---|---|
| f=5mm, FNO=1.8, FOV=83.54°, TTL=6.45mm | | | | | | | | |
| Surface Number | Surface Name | Surface Shape | Y radius (mm) | Thickness (mm) | Material | Refractive index | Abbe number | Focal Length (mm) |
| | Object plane | Spherical | Infinite | Infinite | | | | |
| | Stop | Spherical | Infinite | -0.488 | | | | |
| 1 | First lens | Aspherical | 2.370 | 0.765 | Plastic | 1.55 | 56.14 | 5.14 |
| 2 | | Aspherical | 13.520 | 0.100 | | | | |
| 3 | Second lens | Aspherical | 4.992 | 0.230 | Plastic | 1.67 | 20.35 | -12.57 |
| 4 | | Aspherical | 3.071 | 0.491 | | | | |
| 5 | Third lens | Aspherical | 13.112 | 0.309 | Plastic | 1.67 | 20.35 | -23.73 |
| 6 | | Aspherical | 7.103 | 0.070 | | | | |
| 7 | Fourth lens | Aspherical | 13.467 | 0.709 | Plastic | 1.55 | 56.14 | 10.29 |
| 8 | | Aspherical | -9.449 | 0.025 | | | | |
| 9 | Fifth lens | Aspherical | -28.297 | 0.280 | Plastic | 1.55 | 56.14 | 202.39 |
| 10 | | Aspherical | -22.606 | 0.392 | | | | |
| 11 | Sixth lens | Aspherical | 9.668 | 0.409 | Plastic | 1.64 | 23.80 | -18.50 |
| 12 | | Aspherical | 5.235 | 0.190 | | | | |
| 13 | Seventh lens | Aspherical | 1.875 | 0.520 | Plastic | 1.55 | 56.14 | 5.82 |
| 14 | | Aspherical | 4.127 | 0.805 | | | | |
| 15 | Eighth lens | Aspherical | -6.836 | 0.391 | Plastic | 1.55 | 56.14 | -4.42 |
| 16 | | Aspherical | 3.808 | 0.274 | | | | |
| 17 | Infrared Cut-off Filter | Spherical | Infinite | 0.210 | Glass | | | |
| 18 | | Spherical | Infinite | 0.286 | | | | |
| | Image plane | Spherical | Infinite | 0.000 | | | | |
| Note: The reference wavelength is 555 nm | | | | | | | | |

Table 6

| Surface number | 1 | 2 | 3 | 4 | 5 | 6 | 7 | 8 |
|---|---|---|---|---|---|---|---|---|
| k | -1.0330E+00 | -5.5106E+00 | -2.1918E+00 | -1.3802E+00 | -9.7586E+00 | -2.5417E-01 | -3.1721E+00 | 1.2093E+00 |
| A4 | 8.0800E-03 | -1.7820E-02 | -3.5390E-02 | -1.6570E-02 | -3.9910E-02 | -3.9410E-02 | -1.3300E-02 | -1.7090E-02 |
| A6 | 1.1700E-02 | 3.2730E-02 | 3.3620E-02 | 1.7540E-02 | -6.7500E-03 | -1.7390E-02 | -2.5610E-02 | -1.2530E-02 |
| A8 | -2.5900E-02 | -4.9430E-02 | 5.0000E-05 | 9.9100E-03 | 1.2580E-02 | 4.8680E-02 | 6.5120E-02 | 1.8280E-02 |
| A10 | 3.7420E-02 | 62030E-02 | -4.5640E-02 | -3.1580E-02 | -2.6360E-02 | -8.0080E-02 | -8.8250E-02 | -1.8660E-02 |
| A12 | -3.2990E-02 | -5.4920E-02 | 6.9980E-02 | 2.8670E-02 | 2.1590E-02 | 73450E-02 | 6.9830E-02 | 1.2910E-02 |
| A14 | 1.7940E-02 | 3.1110E-02 | -5.5670E-02 | -9.9700E-03 | -92400E-03 | -4.1310E-02 | -3.1970E-02 | -5.4800E-03 |
| A16 | -5.8400E-03 | -1.0550E-02 | 2.5530E-02 | -1.5000E-03 | 1.7000E-03 | 1.4820E-02 | 8.4400E-03 | 1.4000E-03 |
| A18 | 1.0400E-03 | 1.9300E-03 | -63200E-03 | 2.0600E-03 | 0.0000E+00 | -3.1500E-03 | -1.2000E-03 | -2.0000E-04 |
| A20 | -8.0000E-05 | -1.5000E-04 | 6.5000E-04 | -4.1000E-04 | 0.0000E+00 | 3.0000E-04 | 7.0000E-05 | 1.0000E-05 |

| Surface number | 9 | 10 | 11 | 12 | 13 | 14 | 15 | 16 |
|---|---|---|---|---|---|---|---|---|
| k | -1.1402E+01 | 1.5557E+01 | 5.8830E-01 | -3.2287E+00 | -1.0750E+00 | -9.0653E-01 | -8.8803E-01 | -1.7106E+00 |
| A4 | 1.5000E-04 | -2.5000E-04 | 4.2000E-03 | -6.8210E-02 | -5.5780E-02 | 6.9750E-02 | -3.7710E-02 | -5.2770E-02 |
| A6 | -2.0000E-05 | 2.0000E-05 | -1.9180E-02 | 1.6150E-02 | -2.3480E-02 | -1.0199E-01 | -8.8200E-03 | 6.6300E-03 |
| A8 | -1.0000E-05 | 1.0000E-05 | 2.9650E-02 | 2.5650E-02 | 1.5690E-02 | 53390E-02 | 7.7100E-03 | 8.4000E-04 |
| A10 | 0.0000E+00 | 0.0000E+00 | -2.6740E-02 | -2.6980E-02 | -2.4000E-03 | -1.6940E-02 | -1.7800E-03 | -4.3000E-04 |
| A12 | 0.0000E+00 | 0.0000E+00 | 1.3200E-02 | 1.1810E-02 | -9.8000E-04 | 3.4000E-03 | 2.2000E-04 | 7.0000E-05 |
| A14 | 0.0000E+00 | 0.0000E+00 | -3.9600E-03 | -2.9100E-03 | 4.6000E-04 | -4.3000E-04 | -2.0000E-05 | -1.0000E-05 |
| A16 | 0.0000E+00 | 0.0000E+00 | 7.3000E-04 | 4.2000E-04 | -8.0000E-05 | 3.0000E-05 | 0.0000E+00 | 0.0000E+00 |
| A18 | 0.0000E+00 | 0.0000E+00 | -8.0000E-05 | -3.0000E-05 | 1.0000E-05 | 0.0000E+00 | 0.0000E+00 | 0.0000E+00 |
| A20 | 0.0000E+00 | 0.0000E+00 | 0.0000E+00 | 0.0000E+00 | 0.0000E+00 | 0.0000E+00 | 0.0000E+00 | 0.0000E+00 |

The optical system 10 in this embodiment satisfies the following relationships:

| Third Embodiment | | | |
|---|---|---|---|
| DL/Imgh | 0.32 | DL/TTL | 0.46 |
| sin(FOV)/TTL | 0.15 | TTL/Imgh | 0.70 |
| Fno/TTL | 0.28 | TTL/f | 1.29 |
| BFL/TTL | 0.10 | R11/R12 | 1.85 |
| f6/f7 | -3.18 | | |

Fourth Embodiment

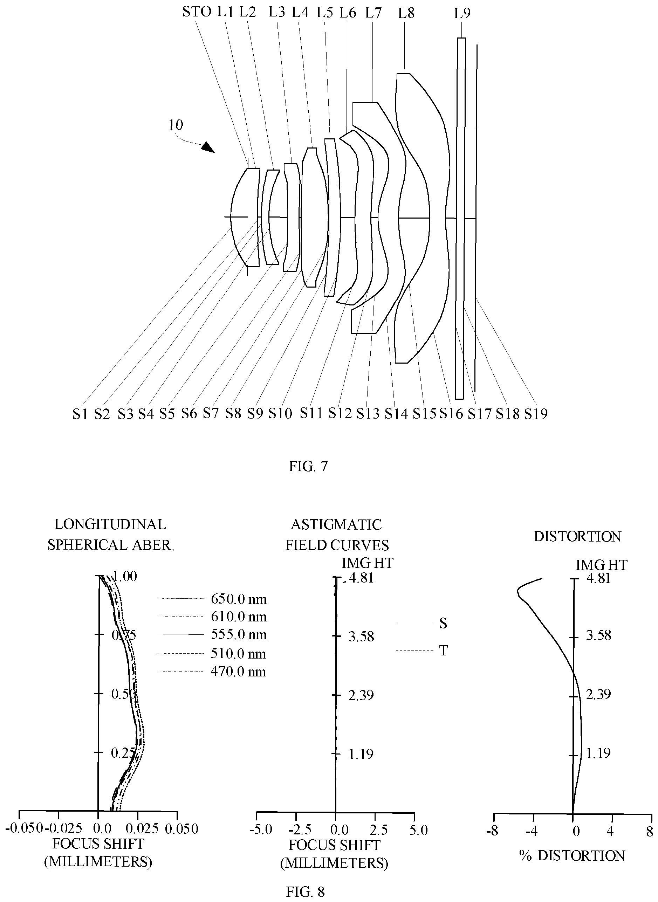

Referring to FIGS. 7 and 8, in the fourth embodiment, the optical system 10 includes, sequentially arranged from an object side to an image side, a stop STO, a first lens L1 having a positive refractive power, a second lens L2 having a negative refractive power, a third lens L3 having a negative refractive power, a fourth lens L4 having a positive refractive power, a fifth lens L5 having a positive refractive power, a sixth lens L6 having a negative refractive power, a seventh lens L7 having a positive refractive power, and an eighth lens L8 having a negative refractive power. A longitudinal spherical aberration diagram (mm), an astigmatism diagram (mm), and a distortion diagram (%) of the optical system 10 in the fourth embodiment are included in FIG. 8. The astigmatism diagram and the distortion diagram are graphs at a wavelength of 555 nm.

An object side surface S1 of the first lens L1 is convex at the optical axis, and an image side surface S2 thereof is concave at the optical axis. The object side surface S1 of the first lens L1 is convex at the circumference thereof, and the image side surface S2 thereof is concave at the circumference thereof.

An object side surface S3 of the second lens L2 is convex at the optical axis, and an image side surface S4 thereof is concave at the optical axis. The object side surface S3 of the second lens L2 is convex at the circumference thereof, and the image side surface S4 thereof is concave at the circumference thereof.

An object side surface S5 of the third lens L3 is convex at the optical axis, and an image side surface S6 thereof is concave at the optical axis. The object side surface S5 of the third lens L3 is concave at the circumference thereof, and the image side surface S6 thereof is convex at the circumference thereof.

An object side surface S7 of the fourth lens L4 is convex at the optical axis, and an image side surface S8 thereof is convex at the optical axis. The object side surface S7 of the fourth lens L4 is convex at the circumference thereof, and the image side surface S8 thereof is concave at the circumference thereof.

An object side surface S9 of the fifth lens L5 is concave at the optical axis, and an image side surface S10 thereof is convex at the optical axis. The object side surface S9 of the fifth lens L5 is concave at the circumference thereof, and the image side surface S10 thereof is convex at the circumference thereof.

An object side surface S11 of the sixth lens L6 is convex at the optical axis, and an image side surface S12 thereof is concave at the optical axis. The object side surface S11 of the sixth lens L6 is concave at the circumference thereof, and the image side surface S12 thereof is convex at the circumference thereof.

An object side surface S13 of the seventh lens L7 is convex at the optical axis, and an image side surface S14 thereof is concave at the optical axis. The object side surface S13 of the seventh lens L7 is concave at the circumference thereof, and the image side surface S14 thereof is convex at the circumference thereof.

An object side surface S15 of the eighth lens L8 is concave at the optical axis, and an image side surface S16 thereof is concave at the optical axis. The object side surface S15 of the eighth lens L8 is convex at the circumference thereof, and the image side surface S16 thereof is concave at the circumference thereof.

In addition, various parameters of the lenses of the optical system 10 in the fourth embodiment are given in Table 7 and Table 8. Definitions of the various structures and parameters can be obtained from the first embodiment, and which will not be repeated herein.

Table 7

| | | | | Fourth Embodiment | | | | |
| --- | --- | --- | --- | --- | --- | --- | --- | --- |
| | | | | r=4.9mm, FNO=1.83, FOV=89.60°, TTL=6.40mm | | | | |
| Surface Number | Surface Name | Surface Shape | Y radius (mm) | Thickness (mm) | Material | Refractive index | Abbe number | Focal Length (mm) |
| | Object plane | Spherical | Infinite | Infinite | | | | |
| | Stop | Spherical | Infinite | -0.442 | | | | |
| 1 | First lens | Aspherical | 2.375 | 0.700 | Plastic | 1.55 | 56.14 | 5.15 |
| 2 | | Aspherical | 13.781 | 0.100 | | | | |
| 3 | Second lens | Aspherical | 4.992 | 0.196 | Plastic | 1.67 | 20.35 | -12.58 |
| 4 | | Aspherical | 3.081 | 0.479 | | | | |
| 5 | Third lens | Aspherical | 15.335 | 0.306 | Plastic | 1.67 | 20.35 | -23.69 |
| 6 | | Aspherical | 7.720 | 0.060 | | | | |
| 7 | Fourth lens | Aspherical | 16.698 | 0.706 | Plastic | 1.55 | 56.14 | 10.21 |
| 8 | | Aspherical | -8.235 | 0.022 | | | | |
| 9 | Fifth lens | Aspherical | -18.438 | 0.299 | Plastic | 1.55 | 56.14 | 137.97 |
| 10 | | Aspherical | -14.897 | 0.378 | | | | |
| 11 | Sixth lens | Aspherical | 9.721 | 0.415 | Plastic | 1.64 | 23.80 | -19.02 |
| 12 | | Aspherical | 5.315 | 0.185 | | | | |
| 13 | Seventh lens | Aspherical | 1.874 | 0.538 | Plastic | 1.55 | 56.14 | 5.70 |
| 14 | | Aspherical | 4.231 | 0.813 | | | | |
| 15 | Eighth lens | Aspherical | -6.888 | 0.403 | Plastic | 1.55 | 56.14 | -4.38 |
| 16 | | Aspherical | 3.738 | 0.287 | | | | |
| 17 | Infrared | Spherical | Infinite | 0.210 | Glass | | | |
| 18 | Cut-off Filter | Spherical | Infinite | 0.299 | | | | |
| | Image plane | Spherical | Infinite | 0.000 | | | | |
| Note: The reference wavelength is 555 nm | | | | | | | | |

Table 8

| Surface number | 1 | 2 | 3 | 4 | 5 | 6 | 7 | 8 |
|---|---|---|---|---|---|---|---|---|
| k | -1.0420E+00 | -2.8865E+00 | -2.2205E+00 | -1.3939E+00 | -6.9813E+00 | -6.4237E-01 | -3.3391E+00 | 1.3674E+00 |
| A4 | 2.6000E-04 | -1.6630E-02 | -3.4580E-02 | -2.2530E-02 | -3.7620E-02 | -3.8750E-02 | -1.3910E-02 | -1.6090E-02 |
| A6 | 4.0530E-02 | 2.4210E-02 | 2.1190E-02 | 5.0490E-02 | -1.4670E-02 | -2.6570E-02 | -2.2860E-02 | -1.9270E-02 |
| A8 | -7.9940E-02 | -1.8210E-02 | 3.3220E-02 | -9.7180E-02 | 2.4550E-02 | 7.6820E-02 | 5.6860E-02 | 3.3800E-02 |
| A10 | 9.5560E-02 | 2.1000E-03 | -8.6940E-02 | 1.8469E-01 | -3.6770E-02 | -1.2875E-01 | -7.4160E-02 | -3.7590E-02 |
| A12 | -7.0470E-02 | 1.2460E-02 | 9.8430E-02 | -2.4559E-01 | 2.7610E-02 | 1.2704E-01 | 5.6640E-02 | 2.6720E-02 |
| A14 | 3.2560E-02 | -1.4620E-02 | -6.7310E-02 | 2.0767E-01 | -1.1410E-02 | -7.8530E-02 | -2.4980E-02 | -1.1700E-02 |
| A16 | -9.1900E-03 | 7.7800E-03 | 2.8570E-02 | -1.0591E-01 | 20500E-03 | 3.0350E-02 | 6.3400E-03 | 3.0900E-03 |
| A18 | 1.4500E-03 | -2.0500E-03 | -6.8500E-03 | 2.9660E-02 | 0.0000E+00 | -6.6800E-03 | -8.6000E-04 | -4.5000E-04 |
| A20 | -1.0000E-04 | 2.2000E-04 | 7.0000E-04 | -3.4900E-03 | 0.0000E+00 | 6.4000E-04 | 5.0000E-05 | 3.0000E-05 |

| Surface number | 9 | 10 | 11 | 12 | 13 | 14 | 15 | 16 |
|---|---|---|---|---|---|---|---|---|
| k | -1.7873E+00 | 1.3084E+01 | 8.6948E-01 | -3.1847E+00 | -1.0617E+00 | -1.1621E+00 | -1.2269E+00 | -1.7988E+00 |
| A4 | 9.0000E-05 | -2.3000E-04 | 5.1300E-03 | -6.8610E-02 | -5.6260E-02 | 6.9200E-02 | -3.7250E-02 | -5.2420E-02 |
| A6 | -3.0000E-05 | 2.0000E-05 | -2.0490E-02 | 1.6340E-02 | -2.4050E-02 | -1.0141E-01 | -8.6800E-03 | 6.5700E-03 |
| A8 | -1.0000E-05 | 1.0000E-05 | 3.0280E-02 | 2.5920E-02 | 1.7980E-02 | 5.2960E-02 | 7.5600E-03 | 8.4000E-04 |
| A10 | 0.0000E+00 | 0.0000E+00 | -2.6330E-02 | -2.7380E-02 | -4.6700E-03 | -1.6760E-02 | -1.7400E-03 | -4.2000E-04 |
| A12 | 0.0000E+00 | 0.0000E+00 | 1.2590E-02 | 1.2030E-02 | 1.7000E-04 | 3.3600E-03 | 2.1000E-04 | 7.0000E-05 |
| A14 | 0.0000E+00 | 0.0000E+00 | -3.6600E-03 | -2.9800E-03 | 1.3000E-04 | -4.2000E-04 | -2.0000E-05 | -1.0000E-05 |
| A16 | 0.0000E+00 | 0.0000E+00 | 6.5000E-04 | 4.3000E-04 | -2.0000E-05 | 3.0000E-05 | 0.0000E+00 | 0.0000E+00 |
| A18 | 0.0000E+00 | 0.0000E+00 | -7.0000E-05 | -3.0000E-05 | 0.0000E+00 | 0.0000E+00 | 0.0000E+00 | 0.0000E+00 |
| A20 | 0.0000E+00 | 0.0000E+00 | 0.0000E+00 | 0.0000E+00 | 0.0000E+00 | 0.0000E+00 | 0.0000E+00 | 0.0000E+00 |

The optical system 10 in this embodiment satisfies the following relationships:

| Fourth Embodiment | | | |
|---|---|---|---|
| DL/Imgh | 0.29 | DL/TTL | 0.42 |
| sin(FOV)/TTL | 0.16 | TTL/Imgh | 0.70 |
| Fno/TTL | 0.29 | TTL/f | 1.30 |
| BFL/TTL | 0.11 | R11/R12 | 1.83 |
| f6/f7 | -3.33 | | |

Fifth Embodiment

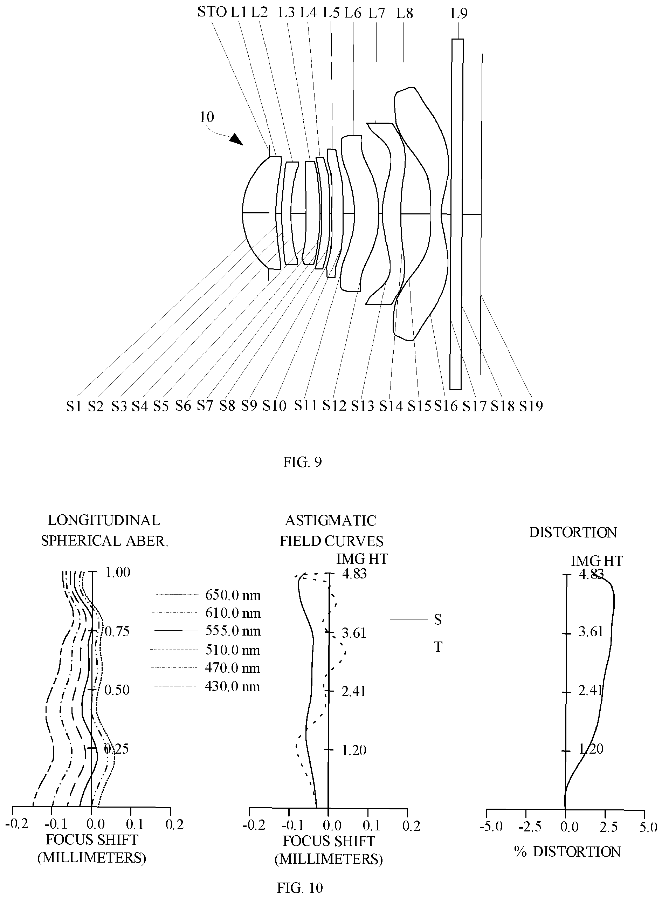

Referring to FIGS. 9 and 10, in the fifth embodiment, the optical system 10 includes, sequentially arranged from an object side to an image side, a stop STO, a first lens L1 having a positive refractive power, a second lens L2 having a negative refractive power, a third lens L3 having a positive refractive power, a fourth lens L4 having a negative refractive power, a fifth lens L5 having a positive refractive power, a sixth lens L6 having a negative refractive power, a seventh lens L7 having a positive refractive power, and an eighth lens L8 having a negative refractive power. A longitudinal spherical aberration diagram (mm), an astigmatism diagram (mm), and a distortion diagram (%) of the optical system 10 in the fifth embodiment are included in FIG. 10. The astigmatism diagram and the distortion diagram are graphs at a wavelength of 555 nm.

An object side surface S1 of the first lens L1 is convex at the optical axis, and an image side surface S2 thereof is concave at the optical axis. The object side surface S1 of the first lens L1 is convex at the circumference thereof, and the image side surface S2 thereof is concave at the circumference thereof.

An object side surface S3 of the second lens L2 is convex at the optical axis, and an image side surface S4 thereof is concave at the optical axis. The object side surface S3 of the second lens L2 is convex at the circumference thereof, and the image side surface S4 thereof is concave at the circumference thereof.

An object side surface S5 of the third lens L3 is concave at the optical axis, and an image side surface S6 thereof is convex at the optical axis. The object side surface S5 of the third lens L3 is concave at the circumference thereof, and the image side surface S6 thereof is convex at the circumference thereof.

An object side surface S7 of the fourth lens L4 is concave at the optical axis, and an image side surface S8 thereof is concave at the optical axis. The object side surface S7 of the fourth lens L4 is concave at the circumference thereof, and the image side surface S8 thereof is convex at the circumference thereof.

An object side surface S9 of the fifth lens L5 is convex at the optical axis, and an image side surface S10 thereof is concave at the optical axis. The object side surface S9 of the fifth lens L5 is concave at the circumference thereof, and the image side surface S10 thereof is concave at the circumference thereof.

An object side surface S11 of the sixth lens L6 is concave at the optical axis, and an image side surface S12 thereof is convex at the optical axis. The object side surface S11 of the sixth lens L6 is convex at the circumference thereof, and the image side surface S12 thereof is concave at the circumference thereof.

An object side surface S13 of the seventh lens L7 is convex at the optical axis, and an image side surface S14 thereof is concave at the optical axis. The object side surface S13 of the seventh lens L7 is concave at the circumference thereof, and the image side surface S14 thereof is convex at the circumference thereof.

An object side surface S15 of the eighth lens L8 is convex at the optical axis, and an image side surface S16 thereof is concave at the optical axis. The object side surface S15 of the eighth lens L8 is concave at the circumference thereof, and the image side surface S16 thereof is concave at the circumference thereof.

In addition, various parameters of the lenses of the optical system 10 in the fifth embodiment are given in Table 9 and Table 10. Definitions of the various structures and parameters can be obtained from the first embodiment, and which will not be repeated herein.

Table 9

| Fifth Embodiment | | | | | | | | |
|---|---|---|---|---|---|---|---|---|
| f=5.37mm, FNO=1.58, FOV=79.76°, TTL=6.85mm | | | | | | | | |
| Surface Number | Surface Name | Surface Shape | Y radius (mm) | Thickness (mm) | Material | Refractive index | Abbe number | Focal Length (mm) |
| | Object plane | Spherical | Infinite | Infinite | | | | |
| | Stop | Spherical | Infinite | -0.760 | | | | |
| 1 | First lens | Aspherical | 2.340 | 0.956 | Plastic | 1.55 | 56.14 | 6.99 |
| 2 | | Aspherical | 5.176 | 0.164 | | | | |
| 3 | Second lens | Aspherical | 4.504 | 0.265 | Plastic | 1.67 | 20.35 | -100.00 |
| 4 | | Aspherical | 4.123 | 0.444 | | | | |
| 5 | Third lens | Aspherical | -22.046 | 0.400 | Plastic | 1.67 | 20.35 | 11.50 |
| 6 | | Aspherical | -5.730 | 0.050 | | | | |
| 7 | Fourth lens | Aspherical | -15.800 | 0.227 | Plastic | 1.55 | 56.14 | -19.26 |
| 8 | | Aspherical | 31.573 | 0.050 | | | | |
| 9 | Fifth lens | Aspherical | 16.014 | 0.327 | Plastic | 1.55 | 56.14 | 34.82 |
| 10 | | Aspherical | 100.914 | 0.334 | | | | |
| 11 | Sixth lens | Aspherical | -2.762 | 0.700 | Plastic | 1.64 | 23.80 | -13.65 |
| 12 | | Aspherical | -4.607 | 0.100 | | | | |
| 13 | Seventh lens | Aspherical | 2.451 | 0.524 | Plastic | 1.55 | 56.14 | 5.28 |
| 14 | | Aspherical | 15.219 | 0.844 | | | | |
| 15 | Eighth lens | Aspherical | 7.014 | 0.320 | Plastic | 1.55 | 56.14 | -4.01 |
| 16 | | Aspherical | 1.640 | 0.285 | | | | |
| 17 | Infrared Cut-off Filter | Spherical | Infinite | 0.320 | Glass | | | |
| 18 | | Spherical | Infinite | 0.518 | | | | |
| | Image plane | Spherical | Infinite | 0.023 | | | | |
| Note: The reference wavelength is 555 nm | | | | | | | | |

Table 10

| Surface number | 1 | 2 | 3 | 4 | 5 | 6 | 7 | 8 |
|---|---|---|---|---|---|---|---|---|
| k | -6.5223E-01 | -1.8585E+01 | -6.2595E+00 | 7.1894E-01 | -1.6288E+02 | -7.3514E+01 | -6.4605E+01 | 9.9000E+01 |
| A4 | 82800E-03 | 8.5200E-03 | -5.5420E-02 | -2.1020E-02 | 3.8840E-02 | 3.5110E-02 | -43900E-03 | -2.2830E-02 |
| A6 | -4.1300E-03 | -83260E-02 | 4.5390E-02 | -8.3050E-02 | -1.7385E-01 | -9.8240E-02 | 3.7600E-02 | -6.5420E-02 |
| A8 | 2.0670E-02 | 2.1561E-01 | -1.2803E-01 | 2.7117E-01 | 4.9043E-01 | 1.3747E-01 | -2.1272E-01 | 1.3841E-01 |
| A10 | -3.4140E-02 | -3.1957E-01 | 2.2839E-01 | -5.0855E-01 | -92714E-01 | -1.5808E-01 | 3.2586E-01 | -1.7149E-01 |
| A12 | 3.1440E-02 | 2.8971E-01 | -2.2672E-01 | 6.1214E-01 | 1.1155E+00 | 1.5311E-01 | -2.5495E-01 | 1.2701E-01 |
| A14 | -1.6810E-02 | -1.6201E-01 | 1.3472E-01 | -4.6341E-01 | -8.4998E-01 | -1.0564E-01 | 1.1601E-01 | -5.6620E-02 |
| A16 | 5.1900E-03 | 5.4280E-02 | -4.7770E-02 | 2.1315E-01 | 3.9437E-01 | 4.4690E-02 | -3.1000E-02 | 1.4960E-02 |
| A18 | -8.5000E-04 | -9.9500E-03 | 93600E-03 | -5.4410E-02 | -1.0135E-01 | -1.0230E-02 | 4.5100E-03 | -2.1500E-03 |
| A20 | 6.0000E-05 | 7.6000E-04 | -7.8000E-04 | 5.9200E-03 | 1.1050E-02 | 9.7000E-04 | -2.8000E-04 | 1.3000E-04 |
| Surface number | 9 | 10 | 11 | 12 | 13 | 14 | 15 | 16 |
| k | 0.0000E+00 | 9.9000E+01 | -2.5682E+00 | -2.7986E+00 | -6.1993E+00 | 4.8469E+00 | -5.5997E+01 | -7.0373E+00 |
| A4 | 1.6940E-02 | -1.8410E-02 | 9.6650E-02 | -4.0140E-02 | -2.5670E-02 | 6.8180E-02 | -1.4437E-01 | -6.7460E-02 |
| A6 | -1.5385E-01 | 2.2200E-02 | -1.7003E-01 | -22470E-02 | 1.3020E-02 | -5.9930E-02 | 5.1630E-02 | 2.2340E-02 |
| A8 | 2.3333E-01 | -1.2962E-01 | 1.6808E-01 | 4.1250E-02 | -1.4370E-02 | 2.6160E-02 | -1.4580E-02 | -5.5800E-03 |
| A10 | -2.0302E-01 | 1.9081E-01 | -1.1470E-01 | -2.6370E-02 | 9.1300E-03 | -73600E-03 | 3.3100E-03 | 9.3000E-04 |
| A12 | 1.0426E-01 | -1.4701E-01 | 5.4730E-02 | 1.0060E-02 | -3.4800E-03 | 1.3300E-03 | -5.1000E-04 | -1.0000E-04 |
| A14 | -3.2090E-02 | 6.6270E-02 | -1.7030E-02 | -2.3600E-03 | 7.9000E-04 | -1.5000E-04 | 5.0000E-05 | 1.0000E-05 |
| A16 | 5.8900E-03 | -1.7480E-02 | 3.2300E-03 | 3.3000E-04 | -1.1000E-04 | 1.0000E-05 | 0.0000E+00 | 0.0000E+00 |
| A18 | -6.0000E-04 | 2.5000E-03 | -3 .4000E-04 | -3.0000E-05 | 1.0000E-05 | 0.0000E+00 | 0.0000E+00 | 0.0000E+00 |
| A20 | 3.0000E-05 | -1.5000E-04 | 1.0000E-05 | 0.0000E+00 | 0.0000E+00 | 0.0000E+00 | 0.0000E+00 | 0.0000E+00 |

The optical system 10 in this embodiment satisfies the following relationships:

| Fifth Embodiment | | | |
|---|---|---|---|
| DL/Imgh | 0.37 | DL/TTL | 0.50 |
| sin(FOV)/TTL | 0.14 | TTL/Imgh | 0.74 |
| Fno/TTL | 0.23 | TTL/f | 1.28 |
| BFL/TTL | 0.14 | R11/R12 | 0.60 |
| f6/f7 | -2.59 | | |

Sixth Embodiment

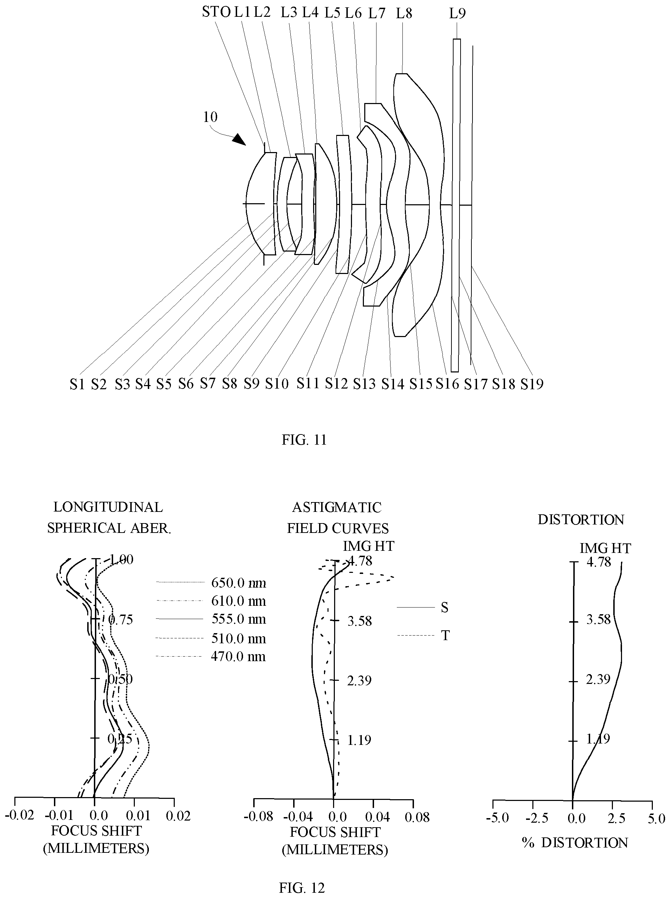

Referring to FIGS. 11 and 12, in the sixth embodiment, the optical system 10 includes, sequentially arranged from an object side to an image side, a stop STO, a first lens L1 having a positive refractive power, a second lens L2 having a negative refractive power, a third lens L3 having a negative refractive power, a fourth lens L4 having a positive refractive power, a fifth lens L5 having a negative refractive power, a sixth lens L6 having a negative refractive power, a seventh lens L7 having a positive refractive power, and an eighth lens L8 having a negative refractive power. A longitudinal spherical aberration diagram (mm), an astigmatism diagram (mm), and a distortion diagram (%) of the optical system 10 in the sixth embodiment are included in FIG. 12. The astigmatism diagram and the distortion diagram are graphs at a wavelength of 555 nm.

An object side surface S1 of the first lens L1 is convex at the optical axis, and an image side surface S2 thereof is concave at the optical axis. The object side surface S1 of the first lens L1 is convex at the circumference thereof, and the image side surface S2 thereof is concave at the circumference thereof.

An object side surface S3 of the second lens L2 is convex at the optical axis, and an image side surface S4 thereof is concave at the optical axis. The object side surface S3 of the second lens L2 is convex at the circumference thereof, and the image side surface S4 thereof is concave at the circumference thereof.

An object side surface S5 of the third lens L3 is convex at the optical axis, and an image side surface S6 thereof is concave at the optical axis. The object side surface S5 of the third lens L3 is concave at the circumference thereof, and the image side surface S6 thereof is convex at the circumference thereof.

An object side surface S7 of the fourth lens L4 is convex at the optical axis, and an image side surface S8 thereof is convex at the optical axis. The object side surface S7 of the fourth lens L4 is concave at the circumference thereof, and the image side surface S8 thereof is convex at the circumference thereof.

An object side surface S9 of the fifth lens L5 is concave at the optical axis, and an image side surface S10 thereof is convex at the optical axis. The object side surface S9 of the fifth lens L5 is concave at the circumference thereof, and the image side surface S10 thereof is convex at the circumference thereof.

An object side surface S11 of the sixth lens L6 is convex at the optical axis, and an image side surface S12 thereof is concave at the optical axis. The object side surface S11 of the sixth lens L6 is concave at the circumference thereof, and the image side surface S12 thereof is convex at the circumference thereof.

An object side surface S13 of the seventh lens L7 is convex at the optical axis, and an image side surface S14 thereof is concave at the optical axis. The object side surface S13 of the seventh lens L7 is concave at the circumference thereof, and the image side surface S14 thereof is convex at the circumference thereof.

An object side surface S15 of the eighth lens L8 is concave at the optical axis, and an image side surface S16 thereof is concave at the optical axis. The obj ect side surface S15 of the eighth lens L8 is concave at the circumference thereof, and the image side surface S16 thereof is convex at the circumference thereof.

In addition, various parameters of the lenses of the optical system 10 in the sixth embodiment are given in Table 11 and Table 12. Definitions of the various structures and parameters can be obtained from the first embodiment, and which will not be repeated herein.

Table 11

| Sixth Embodiment | | | | | | | | |
|---|---|---|---|---|---|---|---|---|
| f=5.0mm, FNO=1.63, FOV=83.56°, TTL=6.48mm | | | | | | | | |
| Surface Number | Surface Name | Surface Shape | Y radius (mm) | Thickness (mm) | Material | Refractive index | Abbe number | Focal Length (mm) |
| | Object plane | Spherical | Infinite | Infinite | | | | |
| | Stop | Spherical | Infinite | -0.5235 | | | | |
| 1 | First lens | Aspherical | 2.413 | 0.7925 | Plastic | 1.55 | 56.14 | 5.23 |
| 2 | | Aspherical | 13.804 | 0.1000 | | | | |
| 3 | Second lens | Aspherical | 4.992 | 0.2800 | Plastic | 1.67 | 20.35 | -13.06 |
| 4 | | Aspherical | 3.102 | 0.4289 | | | | |
| 5 | Third lens | Aspherical | 12.809 | 0.3395 | Plastic | 1.67 | 20.35 | -26.50 |
| 6 | | Aspherical | 7.348 | 0.0622 | | | | |
| 7 | Fourth lens | Aspherical | 59.260 | 0.6014 | Plastic | 1.55 | 56.14 | 9.57 |
| 8 | | Aspherical | -5.708 | 0.0817 | | | | |
| 9 | Fifth lens | Aspherical | -18.966 | 0.3500 | Plastic | 1.55 | 56.14 | -382.36 |
| 10 | | Aspherical | -20.998 | 0.3964 | | | | |
| 11 | Sixth lens | Aspherical | 15.461 | 0.4200 | Plastic | 1.64 | 23.80 | -16.54 |
| 12 | | Aspherical | 6.219 | 0.1797 | | | | |
| 13 | Seventh lens | Aspherical | 1.915 | 0.5376 | Plastic | 1.55 | 56.14 | 5.19 |
| 14 | | Aspherical | 5.331 | 0.6930 | | | | |
| 15 | Eighth lens | Aspherical | -5.887 | 0.3200 | Plastic | 1.55 | 56.14 | -4.32 |
| 16 | | Aspherical | 4.004 | 0.3365 | | | | |
| 17 | Infrared Cut-off Filter | Spherical | Infinite | 0.2100 | Glass | | | |
| 18 | | Spherical | Infinite | 0.3489 | | | | |
| | Image plane | Spherical | Infinite | 0.0000 | | | | |
| Note: The reference wavelength is 555 nm | | | | | | | | |

Table 12

| Surface number | 1 | 2 | 3 | 4 | 5 | 6 | 7 | 8 |
|---|---|---|---|---|---|---|---|---|
| k | -1.0816E+00 | -1.0205E+01 | -1.3555E+00 | -1.5855E+00 | -9.0490E+01 | 3.6712E+00 | -8.1141E+01 | 6.2421E+00 |
| A4 | 8.8700E-03 | -2.3410E-02 | -4.9250E-02 | -2.5730E-02 | -43420E-02 | -3.4560E-02 | -4.6800E-03 | -1.6500E-02 |
| A6 | 3.3500E-03 | 1.4980E-02 | 6.0260E-02 | 3.2420E-02 | -1.3810E-02 | -3.7020E-02 | -4.1590E-02 | -4.9900E-03 |
| A8 | -23800E-03 | 4.7180E-02 | -3.0350E-02 | 2.1900E-03 | 3.2020E-02 | 9.2750E-02 | 8.5780E-02 | -2.5700E-03 |
| A10 | -1.2500E-03 | -1.2584E-01 | -5.3400E-03 | -4.4590E-02 | -5.4720E-02 | -1.3474E-01 | -9.9020E-02 | 9.5300E-03 |
| A12 | 5.2400E-03 | 1.4861E-01 | 2.0280E-02 | 6.7200E-02 | 4.4700E-02 | 1.1889E-01 | 6.8770E-02 | -93200E-03 |
| A14 | -5.1100E-03 | -1.0086E-01 | -1.3380E-02 | -5.6340E-02 | -1.9120E-02 | -6.7160E-02 | -2.8810E-02 | 5.2700E-03 |
| A16 | 2.4300E-03 | 4.0180E-02 | 3.7200E-03 | 2.8780E-02 | 3.3900E-03 | 2.4100E-02 | 7.1500E-03 | -1.7300E-03 |
| A18 | -5.7000E-04 | -8.7200E-03 | -2.2000E-04 | -83700E-03 | 0.0000E+00 | -4.9900E-03 | -9.7000E-04 | 3.0000E-04 |
| A20 | 5.0000E-05 | 7.9000E-04 | -6.0000E-05 | 1.0600E-03 | 0.0000E+00 | 4.6000E-04 | 6.0000E-05 | -2.0000E-05 |

| Surface number | 9 | 10 | 11 | 12 | 13 | 14 | 15 | 16 |
|---|---|---|---|---|---|---|---|---|
| k | 0.0000E+00 | 0.0000E+00 | 1.4827E+01 | -2.9088E+00 | -1.0024E+00 | -1.0201E+00 | -1.1196E+00 | -1.5874E+00 |
| A4 | 0.0000E+00 | 0.0000E+00 | 1.3610E-02 | -7.0020E-02 | -7.4530E-02 | 6.0070E-02 | -3.6550E-02 | -5.1980E-02 |
| A6 | 0.0000E+00 | 0.0000E+00 | -3.1560E-02 | 1.6230E-02 | -5.6200E-03 | -8.8010E-02 | -8.2400E-03 | 6.8500E-03 |
| A8 | 0.0000E+00 | 0.0000E+00 | 4.0450E-02 | 2.5540E-02 | 7.7600E-03 | 4.5020E-02 | 7.1100E-03 | 8.5000E-04 |
| A10 | 0.0000E+00 | 0.0000E+00 | -32930E-02 | -2.6750E-02 | -9.1000E-04 | -1.4180E-02 | -1.6100E-03 | -4.5000E-04 |
| A12 | 0.0000E+00 | 0.0000E+00 | 1.5690E-02 | 1.1740E-02 | -9.0000E-04 | 2.8000E-03 | 1.9000E-04 | 7.0000E-05 |
| A14 | 0.0000E+00 | 0.0000E+00 | -4.6800E-03 | -2.9000E-03 | 3.6000E-04 | -3.4000E-04 | -1.0000E-05 | -1.0000E-05 |
| A16 | 00000E+00 | 00000E+00 | 8.7000E-04 | 4.2000E-04 | -6.0000E-05 | 2.0000E-05 | 00000E+00 | 00000E+00 |
| A18 | 00000E+00 | 00000E+00 | -9.0000E-05 | -3.0000E-05 | 00000E+00 | 00000E+00 | 00000E+00 | 00000E+00 |
| A20 | 00000E+00 | 00000E+00 | 00000E+00 | 00000E+00 | 00000E+00 | 00000E+00 | 00000E+00 | 00000E+00 |

The optical system 10 in this embodiment satisfies the following relationships:

| Sixth Embodiment | | | |
|---|---|---|---|
| DL/Imgh | 0.33 | DL/TTL | 0.47 |
| sin(FOV)/TTL | 0.15 | TTL/Imgh | 0.70 |
| Fno/TTL | 0.25 | TTL/f | 1.30 |
| BFL/TTL | 0.12 | R11/R12 | 2.49 |
| f6/f7 | -3.19 | | |

Seventh Embodiment

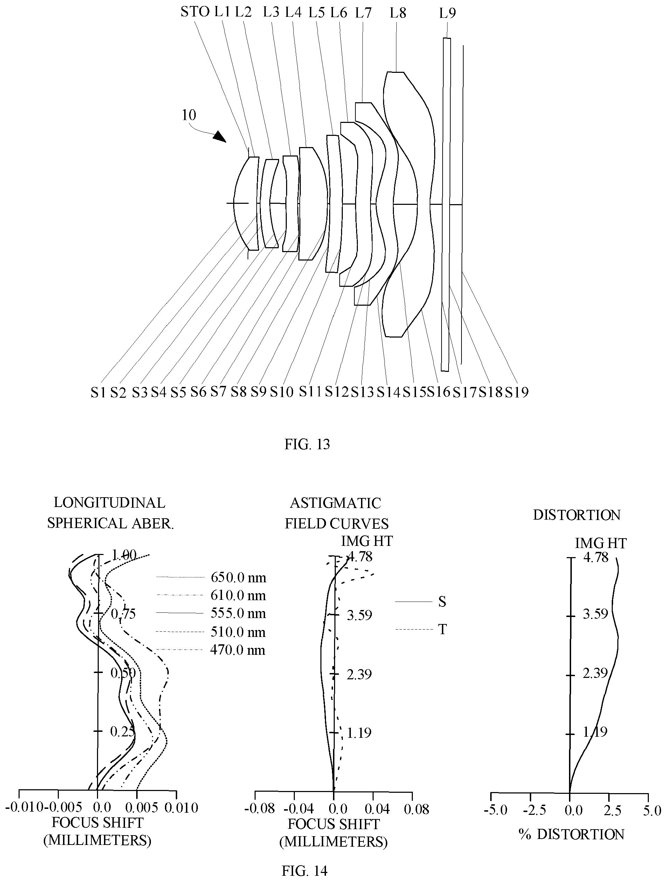

Referring to FIGS. 13 and 14, in the seventh embodiment, the optical system 10 includes, sequentially arranged from an object side to an image side, a stop STO, a first lens L1 having a positive refractive power, a second lens L2 having a negative refractive power, a third lens L3 having a negative refractive power, a fourth lens L4 having a positive refractive power, a fifth lens L5 having a positive refractive power, a sixth lens L6 having a negative refractive power, a seventh lens L7 having a positive refractive power, and an eighth lens L8 having a negative refractive power. A longitudinal spherical aberration diagram (mm), an astigmatism diagram (mm), and a distortion diagram (%) of the optical system 10 in the seventh embodiment are included in FIG. 14. The astigmatism diagram and the distortion diagram are graphs at a wavelength of 555 nm.

An object side surface S1 of the first lens L1 is convex at the optical axis, and an image side surface S2 thereof is concave at the optical axis. The object side surface S1 of the first lens L1 is convex at the circumference thereof, and the image side surface S2 thereof is concave at the circumference thereof.

An object side surface S3 of the second lens L2 is convex at the optical axis, and an image side surface S4 thereof is concave at the optical axis. The object side surface S3 of the second lens L2 is convex at the circumference thereof, and the image side surface S4 thereof is concave at the circumference thereof.

An object side surface S5 of the third lens L3 is convex at the optical axis, and an image side surface S6 thereof is concave at the optical axis. The object side surface S5 of the third lens L3 is concave at the circumference thereof, and the image side surface S6 thereof is convex at the circumference thereof.

An object side surface S7 of the fourth lens L4 is convex at the optical axis, and an image side surface S8 thereof is convex at the optical axis. The object side surface S7 of the fourth lens L4 is concave at the circumference thereof, and the image side surface S8 thereof is convex at the circumference thereof.

An object side surface S9 of the fifth lens L5 is concave at the optical axis, and an image side surface S10 thereof is convex at the optical axis. The object side surface S9 of the fifth lens L5 is concave at the circumference thereof, and the image side surface S10 thereof is convex at the circumference thereof.

An object side surface S11 of the sixth lens L6 is convex at the optical axis, and an image side surface S12 thereof is concave at the optical axis. The object side surface S11 of the sixth lens L6 is concave at the circumference thereof, and the image side surface S12 thereof is convex at the circumference thereof.

An object side surface S13 of the seventh lens L7 is convex at the optical axis, and an image side surface S14 thereof is concave at the optical axis. The object side surface S13 of the seventh lens L7 is concave at the circumference thereof, and the image side surface S14 thereof is convex at the circumference thereof.

An object side surface S15 of the eighth lens L8 is concave at the optical axis, and an image side surface S16 thereof is concave at the optical axis. The object side surface S15 of the eighth lens L8 is concave at the circumference thereof, and the image side surface S16 thereof is convex at the circumference thereof.

In addition, various parameters of the lenses of the optical system 10 in the seventh embodiment are given in Table 13 and Table 14. Definitions of the various structures and parameters can be obtained from the first embodiment, and which will not be repeated herein.

Table 13

| Surface Number | Surface Name | Surface Shape | Y radius (mm) | Thickness (mm) | Material | Refractive index | Abbe number | Focal Length (mm) |
|---|---|---|---|---|---|---|---|---|
| | Seventh Embodiment |||||||||
| | f=5.0mm, FNO=1.8, FOV=83.54°, TTL=6.52mm |||||||||
|  | Object plane | Spherical | Infinite | Infinite |  |  |  |  |
|  | Stop | Spherical | Infinite | -0.415 |  |  |  |  |
| 1 | First lens | Aspherical | 2.423 | 0.655 | Plastic | 1.55 | 56.14 | 5.20 |
| 2 |  | Aspherical | 14.889 | 0.100 |  |  |  |  |
| 3 | Second lens | Aspherical | 4.992 | 0.280 | Plastic | 1.67 | 20.35 | -13.78 |
| 4 |  | Aspherical | 3.162 | 0.460 |  |  |  |  |
| 5 | Third lens | Aspherical | 13.146 | 0.331 | Plastic | 1.67 | 20.35 | -21.50 |
| 6 |  | Aspherical | 6.790 | 0.062 |  |  |  |  |
| 7 | Fourth lens | Aspherical | 37.384 | 0.791 | Plastic | 1.55 | 56.14 | 9.26 |
| 8 |  | Aspherical | -5.803 | 0.068 |  |  |  |  |
| 9 | Fifth lens | Aspherical | -18.385 | 0.350 | Plastic | 1.55 | 56.14 | 180.69 |
| 10 |  | Aspherical | -15.601 | 0.380 |  |  |  |  |
| 11 | Sixth lens | Aspherical | 14.924 | 0.420 | Plastic | 1.64 | 23.80 | -13.32 |
| 12 |  | Aspherical | 5.368 | 0.163 |  |  |  |  |
| 13 | Seventh lens | Aspherical | 1.823 | 0.491 | Plastic | 1.55 | 56.14 | 4.82 |
| 14 |  | Aspherical | 5.379 | 0.688 |  |  |  |  |
| 15 | Eighth lens | Aspherical | -6.071 | 0.360 | Plastic | 1.55 | 56.14 | -4.07 |
| 16 |  | Aspherical | 3.574 | 0.352 |  |  |  |  |
| 17 | Infrared Cut-off Filter | Spherical | Infinite | 0.210 | Glass |  |  |  |
| 18 |  | Spherical | Infinite | 0.364 |  |  |  |  |
|  | Image plane | Spherical | Infinite | 0.000 |  |  |  |  |
| | Note: The reference wavelength is 555 nm |||||||||

Table 14

| Surface number | 1 | 2 | 3 | 4 | 5 | 6 | 7 | 8 |
|---|---|---|---|---|---|---|---|---|
| k | -1.0841E+00 | -9.8475E+00 | -1.7119E+00 | -1.9410E+00 | -1.1437E+02 | 4.0532E+00 | 9.9000E+01 | 62643E+00 |
| A4 | 9.0200E-03 | -2.4600E-02 | -4.7330E-02 | -2.4460E-02 | -43580E-02 | -3.4610E-02 | -2.5800E-03 | -1.2120E-02 |
| A6 | 8.2600E-03 | 2.5130E-02 | 53870E-02 | 2.5100E-02 | -1.8620E-02 | -4.8300E-02 | -5.1720E-02 | -1.7850E-02 |
| A8 | -2.1620E-02 | 2.5390E-02 | -1.0310E-02 | 2.1560E-02 | 4.5510E-02 | 1.1206E-01 | 9.7450E-02 | 1.9190E-02 |
| A10 | 3.6270E-02 | -1.1288E-01 | -5.7890E-02 | -8.8070E-02 | -7.5630E-02 | -1.5097E-01 | -1.0274E-01 | -1.4390E-02 |
| A12 | -3.5780E-02 | 1.6762E-01 | 1.0433E-01 | 1.2665E-01 | 6.2970E-02 | 1.2761E-01 | 6.6510E-02 | 7.8700E-03 |
| A14 | 2.1160E-02 | -1.3852E-01 | -92850E-02 | -1.0459E-01 | -2.7880E-02 | -7.0660E-02 | -2.6550E-02 | -2.7700E-03 |
| A16 | -73000E-03 | 6.6450E-02 | 4.7240E-02 | 5.0990E-02 | 5.1600E-03 | 2.5230E-02 | 6.4100E-03 | 6.1000E-04 |
| A18 | 1.3400E-03 | -1.7220E-02 | -1.2920E-02 | -1.3 550E-02 | 0.0000E+00 | -52600E-03 | -8.6000E-04 | -8.0000E-05 |
| A20 | -1.0000E-04 | 1.8500E-03 | 1.4600E-03 | 1.5100E-03 | 0.0000E+00 | 4.9000E-04 | 5.0000E-05 | 0.0000E+00 |

| Surface number | 9 | 10 | 11 | 12 | 13 | 14 | 15 | 16 |
|---|---|---|---|---|---|---|---|---|
| k | 00000E+00 | 00000E+00 | 1.3583E+00 | -3.3902E+00 | -9.9100E-01 | -3.4560E-01 | -1.3327E+00 | -1.6772E+00 |
| A4 | 00000E+00 | 00000E+00 | 23330E-02 | -6.8720E-02 | -8.0730E-02 | 5.9770E-02 | -3.6910E-02 | -5.1400E-02 |
| A6 | 00000E+00 | 00000E+00 | -4.0870E-02 | 1.6460E-02 | -2.5100E-03 | -8.7980E-02 | -8.3500E-03 | 6.7200E-03 |
| A8 | 00000E+00 | 00000E+00 | 4.3170E-02 | 2.4480E-02 | 7.9700E-03 | 4.5540E-02 | 72600E-03 | 7.8000E-04 |
| A10 | 00000E+00 | 00000E+00 | -3.1740E-02 | -2.6080E-02 | -1.7500E-03 | -1.4710E-02 | -1.6500E-03 | -4.2000E-04 |
| A12 | 00000E+00 | 00000E+00 | 1.4180E-02 | 1.1520E-02 | -5.9000E-04 | 3.0200E-03 | 2.0000E-04 | 7.0000E-05 |
| A14 | 00000E+00 | 00000E+00 | -4.0200E-03 | -2.8600E-03 | 3.4000E-04 | -3.8000E-04 | -1.0000E-05 | -1.0000E-05 |
| A16 | 00000E+00 | 00000E+00 | 7.2000E-04 | 4.1000E-04 | -7.0000E-05 | 3.0000E-05 | 00000E+00 | 00000E+00 |
| A18 | 00000E+00 | 00000E+00 | -8.0000E-05 | -3.0000E-05 | 1.0000E-05 | 00000E+00 | 00000E+00 | 00000E+00 |
| A20 | 00000E+00 | 00000E+00 | 00000E+00 | 00000E+00 | 00000E+00 | 00000E+00 | 00000E+00 | 00000E+00 |

The optical system 10 in this embodiment satisfies the following relationships:

| Seventh Embodiment | | | |
|---|---|---|---|
| DL/Imgh | 0.31 | DL/TTL | 0.43 |
| sin(FOV)/TTL | 0.15 | TTL/Imgh | 0.72 |
| Fno/TTL | 0.28 | TTL/f | 1.30 |
| BFL/TTL | 0.12 | R11/R12 | 2.78 |
| f6/f7 | -2.77 | | |

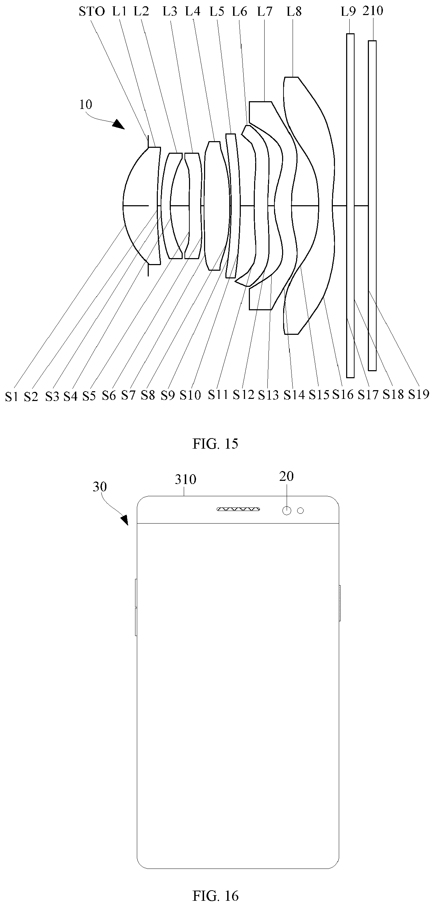

Referring to FIG. 15, in an embodiment according to the present disclosure, the optical system 10 and a photosensitive element 210 are assembled to form a camera module 20. The photosensitive element 210 is arranged on the image side of the eighth lens L8, that is, on the image side of the optical system 10. Generally, a photosensitive surface of the photosensitive element 210 overlaps with the imaging plane S19 of the optical system 10. An infrared cut-off filter L9 is further arranged between the eighth lens L8 and the photosensitive element 210 in this embodiment. The photosensitive element 210 may be a Charge Coupled Device (CCD) or a Complementary Metal Oxide Semiconductor (CMOS). By adopting the above optical system 10, the light flux of the system and the size of the photosensitive surface of the photosensitive element 210 can be reasonably configured, which can effectively improve the photographing quality of the module in a dark light environment.

In some embodiments, the distance between the photosensitive element 210 and each of the lenses in the optical system 10 is relatively fixed. As such, the camera module 20 is a fixed focus module. In other embodiments, a driving mechanism such as a voice coil motor may be provided to enable the photosensitive element 210 to move relative to each of the lenses in the optical system 10, thereby achieving a focusing effect. Specifically, a coil electrically connected to a driving chip is provided on a lens barrel on which the above lenses are assembled, and the camera module 20 is further provided with a magnet, so that the lens barrel is driven to move relative to the photosensitive element 210 by a magnetic force between the energized coil and the magnet, thereby achieving a focusing effect. In some embodiments, a similar driving mechanism can also be provided to drive part of the lenses in the optical system 10 to move, so as to achieve an optical zooming effect.

Referring to FIG. 16, some embodiments of the present disclosure further provide an electronic device 30. The camera module 20 is applied to the electronic device 30 so that the electronic device 30 has a camera function. Specifically, the electronic device 30 includes a fixing member 310. The camera module 20 is mounted on the fixing member 310. The fixing member 310 may be a circuit board, a middle frame, or other components. The electronic device 30 can be, but is not limited to, smart phones, smart watches, e-book readers, in-vehicle camera devices, monitoring devices, medical devices (such as endoscopes), tablet computers, biometric devices (such as fingerprint recognition devices or pupil recognition devices), personal digital assistants (PDAs), unmanned aerial vehicles, etc. Specifically, in some embodiments, the electronic device 30 is a smart phone. The smart phone includes a middle frame and a circuit board provided in the middle frame. The camera module 20 is mounted in the middle frame of the smart phone. The photosensitive element 210 therein is electrically connected to the circuit board. The camera module 20 can be used as a front camera module or a rear camera module of a smart phone. By adopting the camera module 20 according to the embodiments of the present disclosure, the electronic device 30 can also have excellent photographing quality when photographing night scenes, starry sky and other dark scenes.

The "electronic devices" used in the embodiments of the present disclosure may include, but are not limited to, devices that are configured to be connected via a wired line (such as via a public switched telephone network (PSTN), a digital subscriber line (DSL), a digital cable, a direct cable connection, and/or another data connection/network), and/or receive/transmit communication signals via a wireless interface (for example, for a cellular network, a wireless local area network (WLAN), a digital television network such as a digital video broadcasting handheld (DVB-H) network , a satellite network, an amplitude modulation-frequency modulation (AM-FM) broadcast transmitter, and/or another communication terminal). Electronic devices configured to communicate through a wireless interface may be referred to as "wireless communication terminals", "wireless terminals", and/or "mobile terminals". Examples of the mobile terminal include, but are not limited to, a satellite or cellular phone; a personal communication system (PCS) terminal that can combine a cellular radio telephone with data processing, fax, and data communication capabilities; a personal digital assistant (PDA) that can include a radio telephone, a pager, an Internet/Intranet access, a Web browser, a notepad, a calendar, and/or a global positioning system (GPS) receiver; and a conventional laptop and/or handheld receiver or other electronic device including a radio telephone transceiver.

In the description of the present disclosure, it should be understood that orientation or positional relationship indicated by the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like are the orientation or positional relationship shown based on the drawings, which are only to facilitate the description of the present disclosure and simplify the description, rather than indicating or implying the device or elements referred to must have a specific orientation or be constructed and operated in a specific orientation, therefore they cannot be construed as limiting the present disclosure.

In addition, the terms "first" and "second" are used for purposes of description only, and cannot be understood to indicate or imply relative importance or implicitly indicate the number of technical features indicated. Therefore, the features defined "first" and "second" may explicitly or implicitly include at least one of the features. In the description of the present disclosure, the meaning of "plurality" is at least two, such as two, three, or more, unless otherwise clearly and specifically defined.

In the present disclosure, unless otherwise clearly specified and limited, the terms "mounted", "connected with each other", "connected", "fixed" and other terms should be understood in a broad sense, for example, it may be fixedly connected or detachably connected, or integrated as one; it may be mechanically connected or electrically connected; it may be directly connected, or may be indirectly connected through an intermediate, it may be the communication between two components or the interaction between two components, unless otherwise clearly defined. Those of ordinary skill in the art can understand the specific meanings of the above terms in the present disclosure according to specific situations.

In the present disclosure, unless otherwise clearly specified and defined, a first feature is "on" or "below" a second feature may be that the first and second features are in direct contact, or the first and second features are in indirect contact through an intermediate. The first feature is "at the top of', "above", and "over" the second feature may indicate that the first feature is directly or obliquely above the second feature, or only indicate that a level height of the first feature is higher than that of the second feature. The first feature is "at the bottom of', "below", and "under" the second feature may be that the first feature is directly or obliquely below the second feature, or only indicate that the level height of the first feature is less than that of the second feature.

In the descriptions of this specification, the descriptions with reference to the terms "an embodiment", "some embodiments", "example", "specific example", or "some examples", or the like means that the specific features, structures, materials or characteristics described with reference to the embodiments or examples are included in at least one embodiment or example of the present disclosure. In this specification, the schematic representations of the above terms do not necessarily refer to a same embodiment or example. Moreover, the described specific features, structures, materials or characteristics can be combined in an appropriate manner in any one or more embodiments or examples. In addition, those skilled in the art can combine and assemble the different embodiments or examples and the features of the different embodiments or examples described in this specification without contradicting each other.

The technical features of the above described embodiments can be combined arbitrarily. To simplify the description, not all possible combinations of the technical features in the above embodiments are described. However, all of the combinations of these technical features should be considered as within the scope of the present disclosure, as long as such combinations do not contradict with each other.

The above described embodiments are merely illustrate several embodiments of the present disclosure, which are described more specifically and in detail, but they cannot be understood as limiting the scope of the present disclosure. It should be noted that, for those ordinary skilled in the art, several variations and improvements may be made without departing from the concept of the present disclosure, and all of which are within the protection scope of the present disclosure. Therefore, the protection scope of the present disclosure shall be defined by the appended claims.

**Claims**

1. An optical system, sequentially arranged from an object side to an image side, comprising:

   a first lens having a positive refractive power, an object side surface of the first lens being convex at an optical axis, and an image side surface thereof being concave at the optical axis;
   a second lens having a negative refractive power, an object side surface of the second lens being convex at the optical axis, and an image side surface thereof being concave at the optical axis;
   a third lens having a refractive power;
   a fourth lens having a refractive power;
   a fifth lens having a refractive power;
   a sixth lens having a negative refractive power;
   a seventh lens having a positive refractive power, an object side surface of the seventh lens being convex at the optical axis, and an image side surface thereof being concave at the optical axis; and
   an eighth lens having a negative refractive power, an image side surface of the eighth lens being concave at the optical axis;
wherein the optical system satisfies the following condition:

$$0.2 < DL/Imgh < 0.5;$$

wherein DL is a stop aperture size of the optical system, and Imgh is a diagonal length of an effective imaging area of the optical system on an imaging plane.

2. The optical system according to claim 1, further satisfying the following condition:

$$0 < \sin(FOV)/TTL < 0.2;$$

wherein FOV is a maximum field of view of the optical system, and TTL is a distance from the object side surface of the first lens to the imaging plane of the optical system on the optical axis, in unit of mm.

3. The optical system according to claim 1, further satisfying the following condition:

$$Fno/TTL < 0.5;$$

wherein Fno is an f-number of the optical system, and TTL is a distance from the object side surface of the first lens to the imaging plane of the optical system on the optical axis, in unit of mm.

4. The optical system according to claim 1, further satisfying the following condition:

$$0.1 \leq BFL/TTL < 0.4;$$

wherein BFL is a shortest distance from the image side surface of the eighth lens to the imaging plane of the optical system in a direction parallel to the optical axis, and TTL is a distance from the object side surface of the first lens to the imaging plane of the optical system on the optical axis.

5. The optical system according to claim 1, further satisfying the following condition:

$$-4 < f6/f7 < 0;$$

wherein f6 is an effective focal length of the sixth lens, and f7 is an effective focal length of the seventh lens.

6. The optical system according to claim 1, further satisfying the following condition:

$$0.2 < DL/TTL < 1;$$

wherein TTL is a distance from the object side surface of the first lens to the imaging plane of the optical system on the optical axis.

7. The optical system according to claim 1, further satisfying the following condition:

$$TTL/Imgh < 1;$$

wherein TTL is a distance from the object side surface of the first lens to the imaging plane of the optical system on the optical axis.

8. The optical system according to claim 1, further satisfying the following condition:

$$1.0 < TTL/f < 2.0;$$

wherein TTL is a distance from the object side surface of the first lens to the imaging plane of the optical system on the optical axis, and f is an effective focal length of the optical system.

9. The optical system according to claim 1, further satisfying the following condition:

$$0 < R11/R12 < 3.5;$$

wherein R11 is a radius of curvature of an object side surface of the sixth lens at the optical axis, and R12 is a radius of curvature of an image side surface of the sixth lens at the optical axis.

10. The optical system according to claim 1, further comprising a stop arranged on an object side of the first lens.

11. The optical system according to claim 1, wherein the object side surface of the first lens is convex at a circumference thereof, and the image side surface thereof is concave at a circumference thereof.

12. The optical system according to claim 1, wherein the object side surface of the second lens is convex at a circumference thereof, and the image side surface thereof is concave at a circumference thereof.

13. The optical system according to claim 1, wherein an object side surface of the third lens is concave at a circumference thereof, and an image side surface thereof is convex at a circumference thereof.

14. The optical system according to claim 1, wherein the lenses of the optical system are made of plastic.

15. The optical system according to claim 1, wherein the lenses of the optical system are made of glass.

16. The optical system according to claim 1, further comprising an infrared cut-off filter for filtering out infrared light, and the infrared cut-off filter being arranged on an image side of the eighth lens.

17. The optical system according to claim 1, wherein an object side surface of at least one lens in the optical system is aspherical.

18. The optical system according to claim 1, wherein an image side surface of at least one lens in the optical system is aspherical.

19. A camera module, comprising a photosensitive element and the optical system according to any one of claims 1 to 18, the photosensitive element being arranged on an image side of the optical system.

20. An electronic device, comprising a fixing member and the camera module of claim 19, the camera module being disposed on the fixing member.

FIG. 1

FIG. 2

STO L1 L2  L3 L4 L5 L6  L7  L8      L9

10

S1 S2 S3 S4 S5 S6 S7 S8 S9 S10 S11 S12 S13 S14 S15 S16 S17 S18 S19

FIG. 3

LONGITUDINAL
SPHERICAL ABER.

1.00

— 650.0 nm
--- 610.0 nm
— 555.0 nm
---- 510.0 nm
---- 470.0 nm
---- 430.0 nm

0.75

0.50

0.25

-0.08  -0.04  0.0  0.04  0.08
FOCUS SHIFT
(MILLIMETERS)

ASTIGMATIC
FIELD CURVES
IMG HT
4.84

3.63        — S
            --- T

2.42

1.21

-0.10  -0.05  0.0  0.05  0.10
FOCUS SHIFT
(MILLIMETERS)

DISTORTION
IMG HT
4.84

3.63

2.42

1.21

-5.0  -2.5  0.0  2.5  5.0
% DISTORTION

FIG. 4

STO L1 L2 L3 L4 L5 L6 L7 L8 L9

10

S1 S2 S3 S4 S5 S6 S7 S8 S9 S10 S11 S12 S13 S14 S15 S16 S17 S18 S19

FIG. 5

LONGITUDINAL
SPHERICAL ABER.

650.0 nm
610.0 nm
555.0 nm
510.0 nm
470.0 nm

-0.02  -0.01  0.0  0.01  0.02
FOCUS SHIFT
(MILLIMETERS)

ASTIGMATIC
FIELD CURVES
IMG HT

4.78

3.58

2.39

1.19

S
T

-0.08  -0.04  0.0  0.04  0.08
FOCUS SHIFT
(MILLIMETERS)

DISTORTION

IMG HT
4.78

3.58

2.39

1.19

-5.0  -2.5  0.0  2.5  5.0
% DISTORTION

FIG. 6

STO L1 L2  L3 L4  L5 L6  L7   L8    L9

10

S1 S2  S3 S4 S5 S6 S7 S8 S9 S10  S11 S12 S13 S14 S15 S16 S17 S18 S19

FIG. 7

LONGITUDINAL
SPHERICAL ABER.

1.00

————— 650.0 nm
–·–·–·– 610.0 nm
——— 555.0 nm
––––––– 510.0 nm
–·–·–·– 470.0 nm

0.75

0.50

0.25

-0.050 -0.025  0.0  0.025 0.050
FOCUS SHIFT
(MILLIMETERS)

ASTIGMATIC
FIELD CURVES
IMG HT
4.81

——— S
––––– T

3.58

2.39

1.19

-5.0  -2.5  0.0  2.5  5.0
FOCUS SHIFT
(MILLIMETERS)

DISTORTION
IMG HT
4.81

3.58

2.39

1.19

-8  -4  0  4  8
% DISTORTION

FIG. 8

STO L1 L2 L3 L4 L5 L6 L7 L8 L9

10

S1 S2 S3 S4 S5 S6 S7 S8 S9 S10 S11 S12 S13 S14 S15 S16 S17 S18 S19

FIG. 9

LONGITUDINAL
SPHERICAL ABER.

ASTIGMATIC
FIELD CURVES
IMG HT

DISTORTION

IMG HT

——————— 650.0 nm
—·—·—·— 610.0 nm
——————— 555.0 nm
--------- 510.0 nm
—·—·—·— 470.0 nm
——————— 430.0 nm

S
T

-0.2  -0.1  0.0  0.1  0.2
FOCUS SHIFT
(MILLIMETERS)

-0.2  -0.1  0.0  0.1  0.2
FOCUS SHIFT
(MILLIMETERS)

-5.0  -2.5  0.0  2.5  5.0
% DISTORTION

FIG. 10

STO L1 L2  L3 L4  L5 L6  L7  L8      L9

10

S1 S2  S3 S4 S5  S6 S7 S8 S9 S10  S11 S12 S13 S14 S15 S16 S17 S18 S19

FIG. 11

LONGITUDINAL
SPHERICAL ABER.

1.00

-------------- 650.0 nm
-------- 610.0 nm
———— 555.0 nm
-------- 510.0 nm
---------- 470.0 nm

0.75

0.50

0.25

-0.02  -0.01   0.0    0.01   0.02
FOCUS SHIFT
(MILLIMETERS)

ASTIGMATIC
FIELD CURVES
IMG HT
4.78

3.58          S

——— T

2.39

1.19

-0.08  -0.04   0.0    0.04   0.08
FOCUS SHIFT
(MILLIMETERS)

DISTORTION
IMG HT
4.78

3.58

2.39

1.19

-5.0   -2.5    0.0    2.5    5.0
% DISTORTION

FIG. 12

STO L1 L2  L3 L4  L5 L6  L7  L8  L9

10

S1 S2 S3 S4 S5 S6 S7 S8 S9 S10 S11 S12 S13 S14 S15 S16 S17 S18 S19

FIG. 13

LONGITUDINAL
SPHERICAL ABER.

1.00

0.75

0.50

0.25

650.0 nm
610.0 nm
555.0 nm
510.0 nm
470.0 nm

-0.010 -0.005  0.0  0.005 0.010
FOCUS SHIFT
(MILLIMETERS)

ASTIGMATIC
FIELD CURVES
IMG HT
4.78

3.59

2.39

1.19

S
T

-0.08  -0.04  0.0  0.04  0.08
FOCUS SHIFT
(MILLIMETERS)

DISTORTION
IMG HT
4.78

3.59

2.39

1.19

-5.0  -2.5  0.0  2.5  5.0
% DISTORTION

FIG. 14

STO L1 L2  L3 L4  L5 L6 L7  L8        L9 210

10

S1 S2  S3 S4 S5 S6 S7 S8 S9 S10  S11 S12 S13 S14 S15 S16 S17 S18 S19

FIG. 15

30        310        20

FIG. 16

## INTERNATIONAL SEARCH REPORT

| International application No. |
| --- |
| **PCT/CN2020/078814** |

| A. | CLASSIFICATION OF SUBJECT MATTER |
| --- | --- |

G02B 13/00(2006.01)i; G02B 13/18(2006.01)i; G02B 9/64(2006.01)i

According to International Patent Classification (IPC) or to both national classification and IPC

| B. | FIELDS SEARCHED |
| --- | --- |

Minimum documentation searched (classification system followed by classification symbols)

G02B

Documentation searched other than minimum documentation to the extent that such documents are included in the fields searched

Electronic data base consulted during the international search (name of data base and, where practicable, search terms used)

DWPI; VEN; SIPOABS; CNABS: 第一透镜, 第二透镜, 第六透镜, 第七透镜, 第八透镜, 光阑, 孔径, 正, 负, 对角线, lens, stop, first, 1th, second, 2th, sixth, 6th, seventh, 7th, eighth, 8th, wide, angle, positive, negative

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 107703609 A (ZHEJIANG SUNNY OPTICS CO., LTD.) 16 February 2018 (2018-02-16) description, paragraphs 0085-0113, figure 1 | - |
| A | CN 109752823 A (SAMSUNG ELECTRO-MECHANICS CO., LTD.) 14 May 2019 (2019-05-14) entire document | 1-20 |
| A | CN 207424362 U (ZHEJIANG SUNNY OPTICS CO., LTD.) 29 May 2018 (2018-05-29) entire document | 1-20 |
| A | CN 207557562 U (ZHEJIANG SUNNY OPTICS CO., LTD.) 29 June 2018 (2018-06-29) entire document | 1-20 |
| A | CN 109375346 A (AAC ACOUSTIC TECHNOLOGIES HOLDINGS INC.) 22 February 2019 (2019-02-22) entire document | 1-20 |
| A | US 4981344 A (MINOLTA CAMERA K.K.) 01 January 1991 (1991-01-01) entire document | 1-20 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **17 November 2020** | **26 November 2020** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/078814**

| Patent document cited in search report | | | Publication date (day/month/year) | Patent family member(s) | | | Publication date (day/month/year) |
|---|---|---|---|---|---|---|---|
| CN | 107703609 | A | 16 February 2018 | WO | 2019101052 | A1 | 31 May 2019 |
| | | | | US | 2020201002 | A1 | 25 June 2020 |
| | | | | IN | 201917054561 | A | 22 May 2020 |
| CN | 109752823 | A | 14 May 2019 | US | 2019137736 | A1 | 09 May 2019 |
| | | | | CN | 209070190 | U | 05 July 2019 |
| | | | | KR | 2020062153 | A | 03 June 2020 |
| | | | | KR | 2118491 | B | 03 June 2020 |
| | | | | KR | 20190052590 | A | 16 May 2019 |
| CN | 207424362 | U | 29 May 2018 | None | | | |
| CN | 207557562 | U | 29 June 2018 | None | | | |
| CN | 109375346 | A | 22 February 2019 | US | 2020026039 | A1 | 23 January 2020 |
| | | | | JP | 2020013079 | A | 23 January 2020 |
| | | | | JP | 6463591 | B1 | 06 February 2019 |
| | | | | WO | 2020125162 | A1 | 25 June 2020 |
| US | 4981344 | A | 01 January 1991 | None | | | |

Form PCT/ISA/210 (patent family annex) (January 2015)